# EUROPÄISCHE PATENTSCHRIFT

(11) **EP 4 294 891 B1**
(45) Veröffentlichungstag und Bekanntmachung des Hinweises auf die Patenterteilung: **29.01.2025**
(21) Anmeldenummer: 22725508.0
(22) Anmeldetag: 28.04.2022
(51) Int. Cl.: C10B 49/10, C10B 53/00, C10B 53/02, C10J 3/48, C10J 3/56, C10J 3/60, C04B 7/44

(54) **VORRICHTUNG UND VERFAHREN ZUR PYROLYSE VON BRENNSTOFF**
DEVICE AND METHOD FOR THE PYROLYSIS OF FUEL
DISPOSITIF ET PROCÉDÉ DE PYROLYSE DE COMBUSTIBLE

(43) Veröffentlichungstag der Anmeldung: 27.12.2023
(73) Patentinhaber: Schläffer, Patrick, 5751 Maishofen (AT)
(72) Erfinder: Schläffer, Patrick, 5751 Maishofen (AT)
(74) Vertreter: KLIMENT & HENHAPEL
(86) Internationale Anmeldenummer: PCT/EP2022/061368
(87) Internationale Veröffentlichungsnummer: WO 2023/208349

(56) Entgegenhaltungen:
- DE-A1- 3 228 532
- DE-B3- 102009 032 524
- DE-T2- 69 302 379
- JP-A- H0 959 653

## Beschreibung

### GEBIET DER ERFINDUNG

Die Erfindung betrifft eine Vorrichtung und ein Verfahren zur Pyrolyse von Brennstoff für die Beheizung eines Brenners, insbesondere eines Brenners eines Drehrohrofens für die Zementindustrie.

Weiters kann die erfindungsgemäße Vorrichtung eine Steuerung umfassen, die eingerichtet ist, das erfindungsgemäße Verfahren durchzuführen.

### STAND DER TECHNIK

Der Begriff "Pyrolyse" oder "pyrolytische Zersetzung" bezeichnet meist verschiedene thermo-chemische Umwandlungsprozesse, in denen organische Verbindungen als Ausgangsmaterialien bei hohen Temperaturen von üblicherweise rund 500°C und weitgehend unter Ausschluss von Sauerstoff gespalten werden. Aufgrund der hohen Temperaturen können unter diesen Bedingungen chemische Bindungen in den Ausgangsmaterialien gespalten werden, wobei durch einen bewussten Sauerstoffmangel eine vollständige Verbrennung verhindert wird. Mit dem Begriff "Pyrolyse" werden also technische Prozesse bezeichnet, die eine unvollständige thermo-chemische Umwandlung von organischen Verbindungen als Ausgangsmaterialien anstreben, wobei die Umwandlung meist nicht über eine pyrolytische Zersetzung der organischen Verbindungen hinausgeht.

Pyrolyse ist für die Verwertung von Abfällen wie beispielsweise von Altreifen, Altholz oder Kunststoff eine wichtige Vorstufe zur Verbrennung. Insbesondere kann eine pyrolytische Vorbehandlung von Abfallstoffen unter bestimmten Umständen sinnvoll sein. Generell werden bei einem Pyrolyseverfahren zur Verwertung von Abfällen die meist noch feuchten Abfallstoffe zuerst inert erwärmt und anschließend getrocknet, bevor die eigentliche Pyrolyse der getrockneten Abfallstoffe erfolgt. Als feste Pyrolyserückstände bleiben generell Pyrolysekoks und Asche übrig.

Von der Pyrolyse abzugrenzen ist die Vergasung. Dabei handelt es sich ebenfalls um eine thermo-chemische Umwandlung organischer Verbindungen als Ausgangsmaterialien, allerdings geht die Vergasung meist über die Pyrolyse hinaus. Bei einem Vergasungsverfahren zur Verwertung von Abfällen werden die meist feuchten Abfallstoffe ebenfalls zuerst inert erwärmt und anschließend getrocknet, bevor die eigentliche Vergasung der getrockneten Abfallstoffe erfolgt. Die festen Vergasungsrückstände in Form von Koks werden bei einem Vergasungsverfahren jedoch zumindest teilweise verbrannt.

Bei der Vergasung der festen Vergasungsrückstände in Form von Koks bzw. von festem Kohlenstoff C(s) mit Sauerstoff und/oder mit Wasserdampf als Vergasungsmittel können üblicherweise die folgenden chemischen Reaktionen ablaufen, wobei als Vergasungsprodukte unter anderem Kohlenmonoxid CO, Kohlendioxid CO₂, Methangas CH₄ sowie Wasserstoffgas H₂ erhalten werden:
- Reaktionen während der eigentlichen Vergasung:
   (1) C(s)+CO₂ = 2 CO
   (2) C(s)+H₂O = CO+H₂
   (3) C(s)+2 H₂ = CH₄
- Reaktion aufgrund des hohen CO-Gehalts in der Gasphase:
   (4) CO + H₂O = CO₂ + H₂

Bei der Vergasung kommt im Vergleich zur Pyrolyse ein Vergasungsmittel mit Sauerstoff zum Einsatz, wodurch die Ausgangssubstanzen weiter oxidiert werden, dabei verbrennen und hauptsächlich gasförmige Vergasungsprodukte entstehen. Bei der Pyrolyse entstehen zwar ebenfalls Gase, allerdings zielt die Pyrolyse meist darauf ab, in erster Linie flüssige oder feste Pyrolyseprodukte zu erhalten mit einem meist nur geringeren Anteil an gasförmigen Produkten bzw. an Pyrolysegas.

Mittels der Vergasung kann ein vorgelegter Festbrennstoff, beispielsweise in Form von Biomasse, in einen gasförmigen Sekundärbrennstoff umgewandelt werden, wobei das Abgas aus der Vergasung für verschiedene Nutzungsoptionen wie beispielsweise als Brenngas bzw. als Synthesegas weiterverwendet werden kann.

Die Herstellung von mineralischen Baustoffen, insbesondere von Zementklinker, ist sehr energieintensiv. Zur Herstellung von Zement werden unter anderem die Rohstoffe Kalkstein und Ton verwendet, die häufig als natürliches Gemisch vorliegen und dann als Mergel bezeichnet werden. Falls erforderlich können für eine bessere Sinterung beispielsweise auch Quarzsand und eisenoxidhaltige Stoffe dem Ausgangsgemisch für die Zementherstellung beigemischt werden. Diese Rohstoffe werden zuerst zu Rohmehl gemahlen und müssen anschließend auf sehr hohe Temperaturen von rund 1.450°C erhitzt werden, bis die vermahlenen Partikel an ihren Korngrenzen teilweise miteinander verschmelzen und während des Sintervorgangs der sogenannte Zementklinker entsteht. In der Zementindustrie werden dazu seit langem Drehofenanlagen eingesetzt, die üblicherweise direkt beheizt werden. Bei der direkten Beheizung erfolgt die Wärmezufuhr von innerhalb des Drehrohrofens, beispielsweise durch einen Brenner. Ein im Drehrohr befindliches Produkt befindet sich dabei im direkten Kontakt mit dem entstehenden Rauchgas.

In der Zementindustrie in Österreich werden bereits seit längerem auch alternative Sekundärbrennstoffe, sogenannte Ersatzbrennstoffe, zur Beheizung solcher Drehrohröfen eingesetzt. Ersatzbrennstoffe bzw. Sekundärbrennstoffe sind Brennstoffe, die aus Abfällen gewonnen werden, wobei es sich dabei sowohl um feste, flüssige oder gasförmige Abfälle handeln kann. Der Anteil an alternativen Ersatzbrennstoffen, beispielsweise in Form von nicht rezyklierbaren Kunststoffabfällen, Altreifen und Papierfaserreststoffen, der auch als "Ersatzbrennstoffrate" bezeichnet wird, beträgt in der heimischen Zementindustrie derzeit etwa 75% bis 85% der gesamten Feuerungswärmeleistung. Allerdings ist es für den Betrieb solcher Drehrohröfen momentan noch erforderlich, die restlichen 15% bis 25% an benötigter Feuerungswärmeleistung durch fossile Primärbrennstoffe in Form von Kohle, Heizöl und/oder Erdgas bereitzustellen. Dieser Anteil an Primärbrennstoffen ist dabei für die Stützfeuerung bzw. zur Flammenformung des Ofenbrenners solcher Drehrohröfen erforderlich.

Derzeit bekannte Vergasungssysteme, beispielsweise luftbetriebene, autotherme Wirbelschichtvergaser, müssen bei sehr hohen Temperaturen von üblicherweise etwa 850°C betrieben werden, um insbesondere die bei der Vergasung entstehenden festen Rückstände in Form von Koks bzw. Rückstände, die festen Kohlenstoff enthalten, vergasen zu können. Nachteilig muss daher die gesamte Brennstoffmenge auf eine Temperatur von etwa 850°C erhitzt werden, was zu einem erhöhten Luftbedarf bzw. erhöhten Bedarf an Eigenbrennstoff für die zusätzliche Erwärmung des erhaltenen Vergasungsprodukts bei autothermen, luftbetriebenen Vergasungssystemen führt.

Beispielsweise ist aus der DE 693 02 379 T2 ein Reaktor mit zirkulierender Wirbelschicht bekannt geworden, wobei der Reaktor bei einer Brennkammertemperatur im Bereich von 800 bis 950°C betrieben wird. Der zirkulierende Wirbelschichtreaktor dient für die Verbrennung von Kohle oder Bio-Brennstoff und umfasst eine einzige Brennkammer, einen der Brennkammer nachgeordneten Partikelabscheider zur Abscheidung von zirkulierendem Material aus dem aus der Brennkammer abgezogenen Rauchgas, sowie einen Rückführkanal zur Rückführung des abgetrennten zirkulierenden Feststoffmaterials in den unteren Bereich der Brennkammer. In der Mitte des Rückführkanals zwischen dem Partikelabscheider und der Einmündung des Rückführkanals in den unteren Bereich der Brennkammer ist ein Gasverschluss vorgesehen, der im Rückführkanal eine Rezirkulation von aus der Brennkammer aufsteigenden Gasen zum oberhalb angeordneten Partikelabscheider verhindern soll. Der Gasverschluss wird durch mehrere im Rückführkanal hintereinander bzw. übereinander angeordnete Sperrorgane gebildet, die jeweils zueinander versetzt positionierte Öffnungen aufweisen. Die Sperrorgane sind dabei so angeordnet, dass die sich auf den Sperrorganen ansammelnde zirkulierende Masse an vom Partikelabscheider abgetrennten Feststoffmaterial die Sperrorgane blockiert und einen Gasverschluss bildet, der einen aufsteigenden Gasfluss vom unteren Abschnitt des Rückführkanals durch den Gasverschluss hindurch in den oberen Abschnitt des Rückführkanals in Richtung des Partikelabscheiders verhindert.

Durch zwischen den mehreren Sperrorganen im Rückführkanal angeordnete Düsen wird von außen Injektionsluft in den Rückführkanal eingedüst, um das auf und zwischen den Sperrorganen angesammelte, geblockte Feststoffmaterial zu lockern und in Bewegung zu versetzen, damit dieses durch die Öffnungen in den Sperrorganen kontrolliert hindurch in den unteren Abschnitt des Rückführkanals und weiter in die Brennkammer gelangen kann. Durch geeignete Einstellung der Luftzufuhr von Injektionsluft zwischen den Sperrorganen des Gasverschlusses kann eine kontrollierte Fließbewegung des rückzuführenden Feststoffmaterials durch den Gasverschluss nach unten in die Brennkammer aufrechterhalten werden. Gleichzeitig wird gewährleistet, dass der Gasverschluss ausreichend mit Feststoffmaterial befüllt bleibt, um eine unerwünschte Rezirkulation von aufsteigenden Gasen aus dem Brennraum zu verhindern. Die Zufuhr von Brennstoff in die Brennkammer erfolgt durch eine einzige Brennstoffzufuhrleitung, welche in den Rückführkanal unterhalb, also stromabwärts, des Gasverschlusses einmündet.

Überdies ist der Heizwert des erhaltenen Brenngases als Vergasungsprodukt vergleichsweise gering, weshalb beim Betrieb von gasbefeuerten Drehofenbrennern in der Brenngaszufuhr ein vergleichsweise großer Überdruck meist von über 1,5 bar eingestellt werden muss, um die für den Ofenbetrieb erforderliche Energiemenge an Brenngas bereitstellen zu können. Die Kombination der genannten Drücke und hohen Temperaturen von rund 850°C ist allerdings auch aus apparativer Sicht problematisch, da einfache Kesselstähle, die üblicherweise für die Fertigung von Druckapparaten verwendet werden, bei diesen hohen Temperaturen ihre Festigkeit verlieren. Zur Fertigung von mit Druck beaufschlagten Vergasungsreaktoren sind daher druck- und hitzebeständige Edelstähle erforderlich.

Unter dem Begriff "autotherme Reaktion" bzw. "autotherme Verfahrensführung" versteht man jene chemischen Reaktionen bzw. Verfahrensweisen, bei denen zumindest eine exotherme und eine endotherme Reaktion parallel verlaufen, so dass der Gesamtprozess unabhängig von äußerer Wärmezufuhr ist. Ein wichtiges Beispiel ist die Kohlevergasung bei der Herstellung von Synthesegas, wobei glühende Kohle die Energie zur Vergasung liefert.

Aufgrund der vorgenannten hohen Abgastemperaturen von rund 850°C und der damit zusammenhängenden großen Abgasvolumina ist einerseits der apparative Aufwand für den Einsatz einer Brennstoffvergasung in Kombination mit der Primärfeuerung von Drehrohröfen sehr hoch und daher unwirtschaftlich. Andererseits ist der Heizwert von Brenngas, das als Vergasungsprodukt aus derzeit bekannten Vergasungssystemen, beispielsweise aus einem luftbetriebenen, autothermen Wirbelschichtvergaser, erhalten wird, zu gering, um den für den Betrieb von Drehrohröfen derzeit in Form von Primärbrennstoffen zugeführten Anteil an erforderlicher Feuerungswärmeleistung substituieren zu können. Aufgrund der vorgenannten Nachteile gelingt es mit derzeit verfügbaren Systemen zur Brennstoffvergasung bisher nicht, die Primärfeuerung von Brennern von Drehrohröfen komplett auf den Einsatz nur von Ersatzbrennstoffen möglichst ohne Anteil an Primärbrennstoffen umzustellen.

Im Unterschied zu autothermen Wirbelschichtvergasern ist aus der DE 2009 032 524 B3 ein mit Hochdruck aufgeladener Reformer-Reaktor bekannt geworden, in dem durch allotherme Vergasung von kohlenstoffhaltigen Brennstoffen Produktgas erzeugt werden kann. Bei einem solchen Reformer-Reaktor laufen in einem Reaktorbehälter die Trocknung, Pyrolyse und Dampfreformierung des Brennstoffs gleichzeitig ab. Brennstoff gelangt in einer einzigen Zufuhrleitung in den Reformer-Reaktor, der innerhalb des Reaktorbehälters oberhalb einer Brennkammer angeordnet ist. Ausgehend von dem aus der EP 1 187 892 B1 bekannten Heatpipe-Reaktor wird in der DE 2009 032 524 B3 vorgeschlagen, in einer Rückführleitung, die für die Rückführung partikelförmiger Vergasungsrückstände aus dem Reformer-Reaktor in die Brennkammer des Reformer-Reaktors vorgesehen ist, einen Gasfilter sowie eine Druckschleuse als zwei voneinander getrennte Komponenten auszuführen, um diese im Betrieb des Heatpipe-Reformers getrennt voneinander einstellen zu können. Die Ableitung des Gasfilters für abgeschiedene Feststoffpartikel ist dabei mit der Hochdruckseite der dem Gasfilter nachgeordneten Druckschleuse verbunden. Das Produktgas aus dem Reformer-Reaktor wird in einem Gasfilter gereinigt. Ein Anteil der aus dem Reformer-Reaktor abgeschiedenen, rückgeführten Feststoffpartikel gelangt gemeinsam mit Feststoffpartikeln, die in einer pneumatischen Förderleitung aus dem Reformer-Reaktor in den Gasfilter befördert werden, nach Passieren des Gasfilters sowie nach Passieren der Druckschleuse über die außerhalb des Reaktorbehälters verlaufende Rückführleitung in die Brennkammer und werden dort zum Beheizen des Reformer-Reaktors verbrannt.

Die Druckschrift JP H09 59653 A betrifft eine Vorrichtung und ein Verfahren zur Vergasung von Brennstoff in Form von Autoreifen. Autoreifen gelangen über eine Schleuse auf einen Verbrennungsrost einer Festbettfeuerung, die in einem oberen Abschnitt des Vergasungsreaktors angeordnet ist. Partikel, die bei der Verbrennung der Autoreifen durch Schlitze des Verbrennungsrosts hindurch nach unten in eine Vergasungszone unterhalb des Festbetts gelangen, werden unter Zufuhr von Verbrennungsgas in der Vergasungszone vergast. Eine Lochplatte am Boden der Vergasungszone dient dazu, die Gaszufuhr in die Vergasungszone als Wirbelschicht auszubilden. Die flüchtigen Bestandteile aus dem Abfall bzw. den Autoreifen werden oberhalb des Verbrennungsrosts thermisch zersetzt und vergast. In der Produktgasleitung ist ein Zyklonabscheider zur Reinigung des Abgases vorgesehen. Der hauptsächlich aus gebundenem Kohlenstoff bestehende Rückstand aus dem Gasabscheider wird mittels einer Rückführleitung in die Vergasungszone geführt.

Aus der DE 32 28 532 A1 ist ein indirekt beheizter Wirbelschichtreaktor zur Vergasung und Verschwelung von kohlenstoffhaltigen Feststoffen unter Zugabe von sauerstoffhaltigen Verbindungen der Alkali- und Erdalkalimetalle als Zuschlagstoffe bekannt. Oberhalb eines Siebbodens ist eine Wirbelschicht-Vergasungszone und darüber durch einen weiteren Siebboden getrennt ist eine Wirbelschicht-Schwelzone realisiert. Zur Vergasung von Feststoffen in diesem Vergasungsreaktor wird Wasserdampf in die Wirbelschicht zugeführt, wobei ein Überdruck bis 5 bar in der Vergasungszone eingestellt wird. Dem Wirbelschichtreaktor ist ein Herdofen vorgeschaltet, der mit dem Feststoff als Brennstoff beschickt wird. Der im Herdofen getrocknete Feststoff gelangt über eine erste Gutleitung mit einer Materialschleuse weiter in die darunter befindliche Wirbelschicht-Schwelzone und wird dort verschwelt. Schwelkoks aus der Schwelzone wird mittels Fördereinrichtungen und eine Materialschleuse in einer zweiten Gutleitung, die ebenfalls außerhalb des Wirbelschichtreaktors angeordnet ist, in die untere Vergasungszone des Wirbelschichtreaktors befördert.

### AUFGABE DER ERFINDUNG

Es ist daher Aufgabe der Erfindung, die Nachteile des Stands der Technik zu überwinden und eine Vorrichtung zur Pyrolyse vorzuschlagen, mit der es möglich ist, für die Beheizung eines Brenners, insbesondere eines Brenners eines Drehrohrofens für die Zementindustrie, den derzeit noch erforderlichen Anteil an fossilen Primärbrennstoffen durch nicht-fossile Ersatzbrennstoffe mit einem möglichst hohen Anteil an biogenem Kohlenstoff zu ersetzen. Es wird also mit der erfindungsgemäßen Vorrichtung bezweckt, Produktgas bereitzustellen, das mit einer Ersatzbrennstoffrate von bis zu 100% möglichst nur aus Sekundärbrennstoffen und somit ohne den Einsatz von Primärbrennstoffen gewonnen wird und das direkt als gasförmiger Brennstoff dem Brenner zugeführt werden kann.

Weitere Aufgaben der Erfindung bestehen darin, eine Pyrolysevorrichtung anzugeben, wobei das erzeugte Produktgas außerdem einen vergleichsweise höheren Heizwert bei verringertem Eigenbrennstoffbedarf aufweist als dies üblicherweise bei Brenngas aus herkömmlichen Vergasungssystemen der Fall ist. Weiters soll der apparative Aufwand zur Fertigung einer Pyrolysevorrichtung gemäß der Erfindung gegenüber bekannten Vergasungssystemen wie beispielsweise luftbetriebenen, autothermen Wirbelschichtvergasern verringert werden, um möglichst wirtschaftlich und umweltfreundlich Produktgas mit hoher Brennstoffeffizienz, insbesondere für die Befeuerung eines Drehrohrofens, bereitstellen zu können.

Überdies besteht eine der Aufgaben der Erfindung darin, eine Steuerung für den Betrieb einer entsprechenden Vorrichtung zur Pyrolyse sowie ein Verfahren zur Pyrolyse von Brennstoff für die Beheizung eines Brenners anzugeben.

### DARSTELLUNG DER ERFINDUNG

Diese Aufgaben werden mit einer erfindungsgemäßen Vorrichtung zur Pyrolyse von Brennstoff für die Beheizung eines Brenners, insbesondere eines Brenners einer Drehofenanlage, gelöst, wobei die Vorrichtung zur Pyrolyse einen Pyrolysereaktor, einen Vergasungsreaktor, einen zwischen dem Pyrolysereaktor und dem Vergasungsreaktor angeordneten Windsichter, sowie einen dem Pyrolysereaktor nachgeordneten Feststoffabscheider, bevorzugt einen Fliehkraftabscheider, besonders bevorzugt einen Zyklonabscheider, umfasst, wobei der Pyrolysereaktor einen Pyrolyseinnenraum mit einer ersten Brennstoff-Zufuhreinrichtung in den Pyrolyseinnenraum aufweist, wobei der Vergasungsreaktor einen Vergaserinnenraum mit einer zweiten Brennstoff-Zufuhreinrichtung sowie mit zumindest einer Luftzufuhreinrichtung in den Vergaserinnenraum aufweist, wobei der Vergasungsreaktor in einer Höhenrichtung gesehen unterhalb des Pyrolysereaktors angeordnet ist, und wobei der Pyrolyseinnenraum des Pyrolysereaktors mittels des zwischen dem Pyrolysereaktor und dem Vergasungsreaktor angeordneten Windsichters mit dem Vergaserinnenraum des darunterliegenden Vergasungsreaktors kommunizierend verbunden ist, wobei ein Auslass des Pyrolysereaktors für Pyrolysegas aus dem Pyrolyseinnenraum vorgesehen ist, wobei der Auslass für Pyrolysegas mit dem nachgeordneten Feststoffabscheider fluidisch verbunden ist, und wobei der Feststoffabscheider dazu eingerichtet ist, in einem Betriebszustand der Vorrichtung das Pyrolysegas zu reinigen und so ein gereinigtes Produktgas zu erzeugen, welches dem Brenner zuführbar ist, wobei der Feststoffabscheider eine Zufuhrleitung für Pyrolysegas, eine Produktgasleitung für die Zufuhr von gereinigtem Produktgas zum Brenner sowie eine Rückführleitung für aus dem Pyrolysegas abgetrennte Feststoffpartikel, insbesondere für Feingutpartikel, aufweist, und wobei die Zufuhrleitung für Pyrolysegas mit dem Auslass des Pyrolysereaktors fluidisch verbunden ist, wobei der Auslass vorzugsweise in einer oberen Innenraumzone des Pyrolysereaktors angeordnet ist, und wobei die Rückführleitung zur Brennstoffrückführung mit dem Vergaserinnenraum fluidisch verbunden ist und vorzugsweise in diesen mündet.

Weitere vorteilhafte Ausführungen und Weiterbildungen der Erfindung sind den abhängigen Ansprüchen sowie der Beschreibung zu entnehmen. Erfindungsgemäß wird mit der Pyrolysevorrichtung eine Kombination aus einem Vergasungsreaktor und einem Pyrolysereaktor vorgeschlagen, wobei der Vergasungsreaktor unterhalb des Pyrolysereaktors angeordnet ist. Der Pyrolyseinnenraum des Pyrolysereaktors ist mittels des zwischen dem Pyrolysereaktor und dem Vergasungsreaktor angeordneten Windsichters mit dem Vergaserinnenraum des darunterliegenden Vergasungsreaktors kommunizierend verbunden.

Im laufenden Betrieb der erfindungsgemäßen Pyrolysevorrichtung dient der untere Vergasungsreaktor zur Verbrennung und Vergasung des darin befindlichen bzw. zugeführten festen Brennstoffs bei den für Vergaser meist üblichen Temperaturen von rund 850°C. Der Betrieb des Vergasungsreaktors sorgt für die Temperaturerhaltung bzw. Beheizung der Pyrolysevorrichtung. Das dabei entstehende Vergasungsprodukt wird als heißes Abgas durch den Windsichter hindurch nach oben in den Pyrolysereaktor geführt, um dort auf den im Innenraum des Pyrolysereaktors befindlichen, vorgelegten Brennstoff zu treffen. Das heiße Abgas aus dem Vergasungsreaktor kühlt beim Auftreffen auf den im Pyrolyseinnenraum bei Umgebungstemperatur vorgelegten festen Brennstoff ab und es findet ein Wärmeübergang zwischen dem zu pyrolysierenden festen Brennstoff im Pyrolyseinnenraum des Pyrolysereaktors und dem aus dem Vergasungsreaktor durch den Windsichter aufsteigenden Abgas statt.

Die eigentliche Pyrolyse des zugeführten festen Brennstoffes findet im oberhalb des Vergasungsreaktors positionierten Pyrolysereaktor statt. Dazu können der Vergasungsreaktor und der Pyrolysereaktor getrennt mit festem Brennstoff beschickt werden, wobei insbesondere für den Betrieb des Pyrolysereaktors ein hoher Anteil an leichten Kunststofffolien, die auch als "Fluff" bezeichnet werden, im zugeführten Brennstoff vorteilhaft sein können.

Der Pyrolysereaktor weist einen Auslass für Pyrolysegas aus dem Pyrolyseinnenraum auf, wobei der Auslass für Pyrolysegas mit dem nachgeordneten Feststoffabscheider fluidisch bzw. strömungstechnisch verbunden ist. Der Feststoffabscheider ist dazu eingerichtet, im laufenden Betrieb der Vorrichtung das aus dem Pyrolysereaktor abgezogene Pyrolysegas von Feststoffpartikeln zu reinigen und so ein gereinigtes Produktgas zu erzeugen, welches dem Brenner zuführbar ist.

Die im Folgenden verwendeten Positionsangaben von Bauteilen oder Komponenten der Pyrolysevorrichtung, wie beispielsweise die Begriffe "oben", "unten" oberhalb", "unterhalb", "vorne", "hinten", "seitlich", "innerhalb", "außerhalb" und dergleichen, dienen im Wesentlichen dem besseren Verständnis der Erfindung, insbesondere zur Angabe der Lage und Anordnung der entsprechenden Bauteile oder Komponenten in Verbindung mit den nachfolgenden Zeichnungen. In jedem Fall sind solche Positionsangaben dem Fachmann geläufig und schränken die vorliegende Erfindung nicht ein.

In einer besonders zweckmäßigen Ausführung der Erfindung können bei der Vorrichtung die erste Brennstoff-Zufuhreinrichtung sowie die zweite Brennstoff-Zufuhreinrichtung jeweils dazu eingerichtet sein, im Betriebszustand der Vorrichtung feste Brennstoffe, vorzugsweise feste Sekundärbrennstoffe enthaltend feste Abfallstoffe, zu befördern, wobei die erste Brennstoff-Zufuhreinrichtung dazu eingerichtet ist, im Betriebszustand der Vorrichtung einen ersten festen Brennstoff für den Pyrolysereaktor in den Pyrolyseinnenraum zu dosieren, und die zweite Brennstoff-Zufuhreinrichtung dazu eingerichtet ist, im Betriebszustand der Vorrichtung einen zweiten festen Brennstoff für den Vergasungsreaktor in den Vergaserinnenraum zu dosieren.

Vorteilhaft können gemäß dieser Ausführungsform dem Pyrolysereaktor sowie dem Vergasungsreaktor jeweils unabhängig voneinander Brennstoffe, vorzugsweise nicht-fossile Sekundärbrennstoffe, individuell zudosiert werden. Damit können sowohl die Reaktionstemperaturen in der Vorrichtung, also die Pyrolysetemperatur im Pyrolyseinnenraum bzw. die Vergasungstemperatur im Vergaserinnenraum, als auch die Gasmenge und Gaszusammensetzung des Produktgases beeinflusst werden.

Die Brennstoff-Zufuhr ist nicht auf eine einzige Aufgabemöglichkeit in den Pyrolysereaktor und/oder in den Vergasungsreaktor beschränkt. So kann es je nach Ausführungsform der Vorrichtung auch zweckmäßig sein, wenn beispielsweise zwei oder mehrere erste Brennstoff-Zufuhreinrichtungen vorgesehen sind, um an unterschiedlichen Stellen einen ersten festen Brennstoff für den Pyrolysereaktor in den Pyrolyseinnenraum zu dosieren. Ergänzend oder alternativ dazu kann es beispielsweise zweckmäßig sein, zwei oder mehrere zweite Brennstoff-Zufuhreinrichtungen vorzusehen, um an unterschiedlichen Stellen einen zweiten festen Brennstoff für den Vergasungsreaktor in den Vergaserinnenraum zu dosieren.

Besonders flexibel einsetzbar kann eine Vorrichtung gemäß der Erfindung sein, bei der zumindest eine Luftzufuhreinrichtung dazu eingerichtet ist, im Betriebszustand der Vorrichtung Verbrennungsluft in den Vergaserinnenraum, vorzugsweise in eine in Höhenrichtung gesehen untere Innenraumzone des Vergaserinnenraums, zu dosieren. Mit der zudosierten Menge an Verbrennungsluft können die Pyrolysetemperatur im Pyrolyseinnenraum bzw. die Vergasungstemperatur im Vergaserinnenraum, die Gasmenge und Gaszusammensetzung des Produktgases sowie die Strömungsgeschwindigkeit im freien Querschnitt des Windsichters beeinflusst werden.

Um feste Rückstände, die sich während der Vergasung der festen Abfallstoffe bilden, möglichst noch verbrennen und/oder vergasen zu können, kann es vorteilhaft sein, wenn bei der erfindungsgemäßen Vorrichtung der Vergasungsreaktor dazu eingerichtet ist, im Betriebszustand der Vorrichtung mit Druck beaufschlagt zu werden und den in seinem Vergaserinnenraum befindlichen Brennstoff unter Zufuhr von Verbrennungsluft bei einer Vergasungstemperatur von 700°C bis 950°C, vorzugsweise von 750°C bis 900°C, autotherm zu vergasen, wobei der Vergasungsreaktor vorzugsweise ein Wirbelschichtvergaser ist.

In dieser Ausführungsvariante kann eine erfindungsgemäße Vorrichtung besonders vielseitig eingesetzt werden, da im Betriebszustand der Vergasungsreaktor je nach Anwendungsfall bei Umgebungsdruck, leichtem Unterdruck oder unter Beaufschlagung mit Überdruck betrieben werden kann. Für den Einsatz als Vorrichtung zum Beheizen eines Brenners, insbesondere eines Brenners eines Drehrohrofens für die Zementindustrie kann es zweckmäßig sein, wenn der Vergasungsreaktor der Vorrichtung im Betriebszustand mit Überdruck beaufschlagt wird, um ein Produktgas aus der Vorrichtung zu erhalten, das für sich ebenfalls bereits einen Überdruck aufweist und somit möglichst ohne zusätzliches Gebläse direkt dem Brenner zugeleitet werden kann.

In einer vorzugsweisen Ausführung der Erfindung kann der Vergasungsreaktor ein Wirbelschichtvergaser sein. Vorteilhaft liegen bei dieser Bauweise die festen Brennstoffe anfangs wie in einem normalen Feuerofen auf einem Verteilerrost, der zur Verteilung der zugeführten Verbrennungszuluft in dem Festbett der zudosierten festen Brennstoffpartikel innerhalb des Vergasungsreaktors dient.

Im laufenden Betrieb kann eine Wirbelschicht verschiedene Zustände annehmen. Geht man zunächst von einem Festbett aus, das von einem Fluid- oder Gasstrom durchströmt wird, und erhöht man diesen fortwährend, so werden die festen Brennstoffpartikel ab dem sogenannten Lockerungspunkt, dem Punkt der minimalen Fluidisierung, durch den zugeführten Verbrennungsluftstrom getragen. Die entsprechende Gasgeschwindigkeit bei Beginn der Fluidisierung des Festbetts wird als Fluidisierungsgeschwindigkeit bezeichnet.

Erhöht man den Gasstrom weiterhin, so kommt es zu einer Blasenbildung in der Wirbelschicht, wobei dieser Betriebszustand auch als stationäre Wirbelschicht bezeichnet wird. In einem relativ großen Bereich von Gasgeschwindigkeiten verändert sich dieser Zustand nicht wesentlich. Abhängig von der Partikelform und Partikelgröße der Feststoffpartikel kann die Wirbelschicht im Betrieb ihren blasenbildenden Charakter beispielsweise bis zur fünffachen Fluidisierungsgeschwindigkeit beibehalten. In der Regel weisen blasenbildende Wirbelschichten Feststoffvolumenanteile von rund 20% bis 40% auf.

Die Gasgeschwindigkeit in diesem Zustand ist jedoch meist geringer als die Einzelkorn-Sinkgeschwindigkeit der Partikel. Bildlich kann von einem Schwarmverhalten der Partikel gesprochen werden. Die blasenbildende bzw. stationäre Wirbelschicht ist charakterisiert durch intensive Durchmischung in vertikaler Richtung. Je nach Querschnittsfläche des Bettes können sich großräumige Zirkulationsströmungen ausbilden, wobei meist Feststoff im Zentrum der Wirbelschicht aufsteigt, der an den Rändern wieder absinkt. Bei sehr großen Querschnittsflächen bilden sich mehrere Auf- und Abstiegszonen aus. Dieser Effekt kann durch speziell angeordnete Gasverteilerböden noch verstärkt werden, um die Brennstoffeinmischung in die Bodenzone bei Wirbelschichtfeuerungen zu verbessern.

Wird die Fluidisierungsgeschwindigkeit erhöht, kommt es bei einigen Prozessen zunehmend zu einem Austrag von Feinmaterial, das hier bei der erfindungsgemäßen Vorrichtung in den Windsichter und gegebenenfalls weiter in den nachgeordneten Pyrolysereaktor gelangt.

Ein weiterhin anwachsender Fluidstrom führt zu einem vermehrten Austrag zunächst feinerer Partikel aus der Wirbelschicht. Zur Rückführung dieser Partikel ist erfindungsgemäß ein Feststoffabscheider, beispielsweise ein Aerozyklon, zur Feststoffabscheidung vorgesehen, der dem Auslass für Pyrolysegas des Pyrolysereaktors nachgeordnet ist und der vorzugsweise mit einer Rückführleitung zur Brennstoffrückführung mit dem Vergaserinnenraum verbunden ist. Dieser Feststoffabscheider trennt vom Gasstrom den ausgetragenen Feststoff ab, der dann im laufenden Betrieb über die Rückführleitung wieder in die Bodenzone der sich ausbildenden, zirkulierenden Wirbelschicht zurückbefördert wird.

Der Vorteil in der technischen Anwendung einer zirkulierenden Wirbelschicht gegenüber einer blasenbildenden Wirbelschicht besteht in vergleichsweise höheren Gasgeschwindigkeiten im Falle der Betriebsweise mit einer zirkulierenden Wirbelschicht, die bei Verbrennungsprozessen größere Brennstoffzugaben erlaubt.

Als Nachteile der Betriebsweise einer zirkulierenden Wirbelschicht gegenüber der blasenbildenden Wirbelschicht sind ein höherer apparativer Aufwand sowie ein höherer Energieaufwand und damit einhergehend höhere Betriebskosten für das im Falle der zirkulierenden Wirbelschicht erforderliche größere Gebläse zur Einblasung der Verbrennungszuluft zu nennen.

In einer weiteren Ausführungsform der Erfindung kann es weiterhin zweckmäßig sein, wenn bei der erfindungsgemäßen Vorrichtung der Vergasungsreaktor dazu eingerichtet ist, im Betriebszustand der Vorrichtung mit einem Überdruck von 0,5 bar bis 20 bar, vorzugsweise von 0,8 bar bis 10 bar, beaufschlagt zu werden. Wie zuvor bereits erwähnt kann diese Ausführungsform den Vorteil bieten, dass das mit der Vorrichtung erzeugte Produktgas bereits einen ausreichenden Überdruck beim Verlassen der Vorrichtung aufweist, um ohne ein erforderliches zusätzliches Gebläse, das in die Produktgasleitung zwischengeschaltet werden müsste, direkt dem Brenner als Brennstoff zugeführt werden zu können.

Um eine möglichst effiziente Verwertung der eingesetzten Brennstoffe zu erzielen, kann es in einer weiteren Ausführungsvariante der Erfindung vorteilhaft sein, wenn bei einer Vorrichtung gemäß der Erfindung der Pyrolysereaktor dazu eingerichtet ist, im Betriebszustand der Vorrichtung den in seinem Pyrolyseinnenraum befindlichen Brennstoff gemeinsam mit heißem Abgas, welches dem Pyrolysereaktor aus dem Vergasungsreaktor durch den Windsichter hindurch zuführbar ist, bei einer Pyrolysetemperatur von höchstens 600°C, vorzugsweise von höchstens 500°C, besonders bevorzugt von höchstens 450°C, zu pyrolysieren, wobei der Pyrolysereaktor vorzugsweise ein Flugstromreaktor ist.

Übliche Synthesegastemperaturen liegen bei derzeit bekannten Vergasungsvorrichtungen meist über 850°C. Nachteilig ist bei einer solchen Temperaturführung jedoch, dass bei solchen hohen Vergasertemperaturen von über 850°C aufgrund des erhöhten Luftbedarfs bei autothermen, luftbetriebenen Vergaservorrichtungen auch das dabei erhaltene Abgas zwangsläufig auf dieselbe hohe Gasaustrittstemperatur von über 850°C miterhitzt werden muss, wodurch der Heizwert des heißen Abgases drastisch sinkt.

Überdies ist auch der apparative Aufwand für die Errichtung und den Betrieb einer herkömmlichen Vergaservorrichtung, die bei Synthesegastemperaturen von über 850°C betrieben wird, höher als bei einer erfindungsgemäßen Vorrichtung, da einfache Kesselstähle, die üblicherweise für die Fertigung von Druckapparaten verwendet werden, bei diesen hohen Temperaturen ihre Festigkeit verlieren. Zur Fertigung von mit Druck beaufschlagten Vergasungsreaktoren sind daher druck- und hitzebeständige Edelstähle erforderlich.

Im Unterschied dazu bietet die erfindungsgemäße Vorrichtung, bei der zwei Reaktoren, nämlich ein Vergasungsreaktor und ein Pyrolysereaktor, in geeigneter Weise miteinander kombiniert sind, den Vorteil, dass die kombinierte Pyrolyse und Trocknung des zudosierten Brennstoffs im Pyrolysereaktor bei vergleichsweise moderaten Pyrolysetemperaturen von höchstens 600°C, vorzugsweise von höchstens 500°C, besonders bevorzugt von höchstens 450°C, erfolgt.

Diese Temperaturwahl der Pyrolysetemperatur im Pyrolysereaktor bietet den Vorteil, dass das Produktgas aus der erfindungsgemäßen Vorrichtung so geführt werden kann, dass das gereinigte Produktgas mit einer Gasaustrittstemperatur von höchstens 450°C die Vorrichtung verlässt. Somit können deutliche höhere Heizwerte im Produktgas erzielt werden als dies bei herkömmlichen Vergasungsvorrichtungen der Fall ist mit Abgastemperaturen des Synthesegases von über 850°C. Auch aus apparativer Sicht bietet diese Temperaturwahl der Pyrolysetemperatur im Pyrolysereaktor den Vorteil, dass insbesondere bei Pyrolysetemperaturen von höchstens 450°C einfache Kesselstähle ausreichende Festigkeit für die Fertigung des Pyrolysereaktors aufweisen.

In einer bevorzugten Ausführungsvariante kann der Pyrolysereaktor ein Flugstromreaktor sein. Bei einem Flugstromvergaser kann der Brennstoff beispielsweise als Staub oder als Paste über einen eigenen Brenner in den Reaktionsraum bzw. Pyrolyseinnenraum eingebracht werden, wodurch die Pyrolyseprozesse sehr rasch ablaufen. Diese Form der Brennstoffzuführung bedarf meist einer entsprechenden Vorbehandlung des sekundären Brennstoffs bzw. der zugeführten Biomasse, um beispielsweise mittels einer pneumatischen Brennstoff-Zufuhreinrichtung in den Pyrolysereaktor eingebracht zu werden und dort in sehr kurzer Zeit pyrolysiert zu werden.

In einer bevorzugten Ausführungsform der erfindungsgemäßen Vorrichtung kann der Windsichter zumindest eine Sichterblende, vorzugsweise zumindest eine justierbare Sichterblende, aufweisen, wobei der Windsichter dazu eingerichtet ist, im Betriebszustand der Vorrichtung Feststoffpartikel des Brennstoffs in Grobgutpartikel, die vom Pyrolysereaktor entgegen der Höhenrichtung nach unten in den Vergasungsreaktor gelangen können, sowie in Feingutpartikel, die leichter sind als Grobgutpartikel und die in Höhenrichtung nach oben in den Pyrolysereaktor gelangen können, zu klassieren, wobei im Betriebszustand der Vorrichtung vorzugsweise eine Gasgeschwindigkeit im Bereich der zumindest einen Sichterblende von 10 m/s bis 40 m/s, besonders bevorzugt von 15 m/s bis 30 m/s, einstellbar ist.

Die Ausführung des Windsichters mit zumindest einer verstellbaren bzw. justierbaren Sichterblende bietet den Vorteil, dass für die jeweilige Anlagenleistung der Vorrichtung der Abscheidegrad des Windsichters jeweils individuell eingestellt werden kann.

Beim Betrieb der Vorrichtung insbesondere mit hohen Durchsatzleistungen an Brennstoff kann es bei hohen Strömungsgeschwindigkeiten innerhalb einer einzigen Sichterblende problematisch sein, dass das nach oben transportierte Bettmaterial der Wirbelschicht nicht mehr entgegen der Strömungsrichtung des aufsteigenden Abgases aus dem Vergasungsreaktors in der Sichterblende nach unten in den Vergaserinnenraum fallen kann, sondern nach oben in den Pyrolyseinnenraum ausgetragen wird. Bei zwei oder mehreren Sichterblenden können Feingutpartikel auch bei höheren Strömungsgeschwindigkeiten in den Blendenquerschnitten aufgrund von leichten Druckschwankungen zwischen den zwei oder mehreren Sichterblenden dennoch wieder in die Wirbelschicht zurückfallen, was vorteilhaft ist. Allerdings können bei Ausführungen des Windsichters mit mehreren Sichterblenden je nach Betriebsweise einzelne Sichterblenden im laufenden Betrieb auch verstopfen.

Hohe Strömungsgeschwindigkeiten innerhalb der zumindest einen Sichterblende können im Betriebszustand der Vorrichtung insbesondere dann auftreten, wenn beispielsweise ein volumetrischer Verdichter wie ein Schraubenverdichter oder ein Drehkolbengebläse zur Zuführung der Verbrennungsluft in den Vergasungsreaktor vorgesehen ist.

Bei der erfindungsgemäßen Vorrichtung weist der Feststoffabscheider eine Zufuhrleitung für Pyrolysegas, eine Produktgasleitung für die Zufuhr von gereinigtem Produktgas zum Brenner sowie eine Rückführleitung für aus dem Pyrolysegas abgetrennte Feststoffpartikel, insbesondere für Feingutpartikel, auf, wobei die Zufuhrleitung für Pyrolysegas mit dem Auslass des Pyrolysereaktors fluidisch verbunden ist, wobei der Auslass vorzugsweise in einer oberen Innenraumzone des Pyrolysereaktors angeordnet ist, und wobei die Rückführleitung zur Brennstoffrückführung mit dem Vergaserinnenraum fluidisch verbunden ist und vorzugsweise in diesen mündet. Nicht pyrolysierte, leichte Brennstoffanteile bzw. Feingutpartikel, die im Betriebszustand der Vorrichtung mit dem Pyrolysegas aus dem Pyrolyseinnenraum des Pyrolysereaktors ausgetragen werden, werden in dieser besonders effektiven Ausführungsvariante der Erfindung vom Feststoffabscheider aus dem Pyrolysegas abgetrennt und gelangen mittels der Rückführleitung als rückgeführter Brennstoff erneut in den Vergaserinnenraum. Somit werden die Brennstoffausbeute sowie die Energieeffizienz der erfindungsgemäßen Vorrichtung weiter erhöht.

Die eingangs genannten Aufgaben werden auch von einem Verfahren zur Pyrolyse von Brennstoff für die Beheizung eines Brenners, insbesondere eines Brenners einer Drehofenanlage, mit den Merkmalen von Anspruch 8 erfüllt.

Erfindungsgemäß umfasst ein Verfahren zur Pyrolyse von Brennstoff für die Beheizung eines Brenners, insbesondere eines Brenners einer Drehofenanlage, die folgenden Schritte:
- Bereitstellen einer Vorrichtung gemäß der Erfindung;
- Bereitstellen und dosiertes Zuführen eines ersten festen Brennstoffs, vorzugsweise eines ersten festen Sekundärbrennstoffs enthaltend feste Abfallstoffe, mit der ersten Brennstoff-Zufuhreinrichtung in den Pyrolyseinnenraum des Pyrolysereaktors;
- Bereitstellen und dosiertes Zuführen eines zweiten festen Brennstoffs, vorzugsweise eines zweiten festen Sekundärbrennstoffs enthaltend feste Abfallstoffe, mit der zweiten Brennstoff-Zufuhreinrichtung in den Vergaserinnenraum des Vergasungsreaktors;
- Bereitstellen und dosiertes Zuführen von Verbrennungsluft mit zumindest einer Luftzufuhreinrichtung in den Vergaserinnenraum;
- gegebenenfalls Entzünden des im Vergaserinnenraum befindlichen festen Brennstoffs bei gleichzeitiger Zufuhr von Verbrennungsluft in den Vergaserinnenraum;
- Einstellen einer Vergasungstemperatur im Vergaserinnenraum von 700°C bis 950°C, vorzugsweise von 750°C bis 900°C;
- Einstellen eines Überdrucks im Vergaserinnenraum von 0,5 bar bis 20 bar, vorzugsweise von 0,8 bar bis 10 bar;
- Führen von heißem Abgas, welches Abgas bei der Vergasung des im Vergaserinnenraum befindlichen Brennstoffs entsteht, aus dem Vergaserinnenraum durch den Windsichter hindurch in den oberhalb des Windsichters angeordneten Pyrolyseinnenraum des Pyrolysereaktors;
- Erhitzen des im Pyrolyseinnenraum des Pyrolysereaktors befindlichen festen Brennstoffs durch Wärmeübertragung infolge eines direkten Kontakts mit dem aufsteigenden heißen Abgas bei gleichzeitiger Abkühlung des heißen Abgases;
- Einstellen einer Pyrolysetemperatur im Pyrolyseinnenraum von höchstens 600°C, vorzugsweise von höchstens 500°C, besonders bevorzugt von höchstens 450°C;
- Abführen von Pyrolysegas aus dem Pyrolyseinnenraum und Abscheiden von Feststoffpartikeln aus dem Pyrolysegas, wobei ein gereinigtes Produktgas erhalten wird, das dem Benner zugeführt werden kann;
- Abscheiden von Feststoffpartikeln aus dem Pyrolysegas in einem Feststoffabscheider, vorzugsweise in einem Fliehkraftabscheider, besonders bevorzugt in einem Zyklonabscheider, wobei aus dem Pyrolysegas abgetrennte Feststoffpartikel, insbesondere Feingutpartikel, in den Vergaserinnenraum zurückgeführt werden.

Hinsichtlich der Vorteile und vorteilhaften Wirkungen des erfindungsgemäßen Verfahrens wird auf die zuvor genannten Vorteile in Bezug auf die erfindungsgemäße Vorrichtung verwiesen. Die genannten Vorteile und Wirkungen gelten gleichermaßen für die erfindungsgemäße Vorrichtung, als auch für die Durchführung des erfindungsgemäßen Verfahrens.

Je nach Anwendungsfall können bei einem erfindungsgemäßen Verfahren eine jeweils gleiche Brennstoffzusammensetzung für den ersten festen Brennstoff und den zweiten festen Brennstoff ausgewählt werden, oder es kann alternativ dazu eine Brennstoffzusammensetzung für den ersten festen Brennstoff ausgewählt werden mit einem größeren Anteil an Kunststoff, vorzugsweise Kunststofffolien, als für den zweiten festen Brennstoff.

Besonders zweckmäßig kann bei einem Verfahren gemäß der Erfindung im Betrieb der Vorrichtung im Windsichter eine Gasgeschwindigkeit im Bereich zumindest einer, vorzugsweise justierbaren, Sichterblende des Windsichters von 10 m/s bis 40 m/s, besonders bevorzugt von 15 m/s bis 30 m/s, eingestellt werden. Je nach Brennstoffzusammensetzung sowie Partikelgrößenverteilung der zugeführten festen Brennstoffe kann bei diesen Gasgeschwindigkeiten im Windsichter ein stabiler Dauerbetrieb des Verfahrens unter Verwendung der erfindungsgemäßen Vorrichtung ermöglicht werden.

Bei niedrigeren Gasgeschwindigkeiten beispielsweise kleiner als 10 m/s, die im laufenden Betrieb im Windsichter gemessen werden, ist die Gasströmung des aufsteigenden Abgases aus dem Vergasungsreaktors zu gering, um kleine bzw. leichte Feingutpartikel aus dem Vergaserinnenraum durch den Windsichter in den Pyrolyseinnenraum mitzureißen. Auch kleine bzw. leichte Feingutpartikel verbleiben dabei im Vergaserinnenraum. Das Festbett des zugeführten Brennstoffs im Vergaserinnenraum ist unter diesen Bedingungen jedoch vergleichsweise kompakt und wird zu wenig gelockert bzw. zu wenig fluidisiert, weshalb die Vergasung nur unzureichend funktioniert.

Umgekehrt kann es bei höheren Gasgeschwindigkeiten beispielsweise größer als 40 m/s, die im laufenden Betrieb im Windsichter gemessen werden, dazu führen, dass der gesamte Festbettinhalt des im Vergaserinnenraum aufgegebenen festen Brennstoffs in unerwünschter Weise durch den Windsichter hindurch in den nachgeordneten Pyrolyseinnenraum ausgetragen wird. Auch in diesem Fall ist ein zufriedenstellender Betrieb der Vorrichtung nach dem erfindungsgemäßen Verfahren nicht möglich.

Besonders vorteilhaft kann ein Verfahren gemäß der Erfindung geführt werden, wenn das gereinigte Produktgas beim Austritt aus dem Feststoffabscheider mit einer Austrittstemperatur von höchstens 450°C, vorzugsweise von höchstens 420°C, besonders bevorzugt von höchstens 400°C, mit einem Überdruck von zumindest 1,5 bar sowie vorzugsweise mit einem Heizwert des gereinigten Produktgases von zumindest 11 MJ/Nm³, vorzugsweise zumindest 13 MJ/Nm³, besonders bevorzugt zumindest 15 MJ/Nm³, erhalten wird.

Wie zuvor bereits festgehalten, können mit dem erfindungsgemäßen Verfahren höhere Heizwerte des Produktgases mit niedrigeren Gasaustrittstemperaturen von höchstens 450°C erreicht werden, als dies bei herkömmlichen Vergaserverfahren bei wesentlich höheren Synthesegastemperaturen von über 850°C der Fall ist. Erfindungsgemäß kann also besonders vorteilhaft ein Produktgas aufgrund der vergleichsweise niedrigeren Gasaustrittstemperatur des gereinigten Produktgases von höchstens 450°C mit vergleichsweise höheren Heizwerten von zumindest 11 MJ/Nm³ erhalten werden.

Ein Überdruck des verfahrensgemäß bereitgestellten, gereinigten Produktgases von zumindest 1,5 bar hat den Vorteil, dass das erzeugte Produktgas direkt einem nachgeordneten Brenner, insbesondere einem Brenner einer Drehofenanlage, zugeführt werden kann.

Im Rahmen der Erfindung wird überdies eine erfindungsgemäße Vorrichtung umfassend eine Steuerung angegeben, wobei die Steuerung zur Durchführung der folgenden Verfahrensschritte eingerichtet ist:
- Dosieren eines bereitgestellten ersten festen Brennstoffs, vorzugsweise eines ersten festen Sekundärbrennstoffs enthaltend feste Abfallstoffe, mit der ersten Brennstoff-Zufuhreinrichtung in den Pyrolyseinnenraum des Pyrolysereaktors;
- Dosieren eines bereitgestellten zweiten festen Brennstoffs, vorzugsweise eines zweiten festen Sekundärbrennstoffs enthaltend feste Abfallstoffe, mit der zweiten Brennstoff-Zufuhreinrichtung in den Vergaserinnenraum des Vergasungsreaktors;
- Dosieren von bereitgestellter Verbrennungsluft mit der zumindest einen Luftzufuhreinrichtung in den Vergaserinnenraum;
- gegebenenfalls Entzünden des im Vergaserinnenraum befindlichen festen Brennstoffs bei gleichzeitiger Zufuhr von Verbrennungsluft in den Vergaserinnenraum;
- Einstellen einer Vergasungstemperatur im Vergaserinnenraum von 700°C bis 950°C, vorzugsweise von 750°C bis 900°C, wobei eine Temperaturregelung der Vergasungstemperatur abhängig von einer Dosiermenge des zugeführten zweiten festen Brennstoffs sowie abhängig von einer Dosiermenge der zugeführten Verbrennungsluft in den Vergaserinnenraum erfolgt;
- Einstellen eines Überdrucks im Vergaserinnenraum von 0,5 bar bis 20 bar, vorzugsweise von 0,8 bar bis 10 bar, wobei eine Druckeinstellung abhängig von der Dosiermenge der zugeführten Verbrennungsluft erfolgt;
- Führen von heißem Abgas aus dem Vergaserinnenraum durch den Windsichter hindurch in den oberhalb des Windsichters angeordneten Pyrolyseinnenraum des Pyrolysereaktors, wobei eine Regelung der Dosiermenge des zugeführten zweiten festen Brennstoffs sowie eine Regelung der Dosiermenge der zugeführten Verbrennungsluft abhängig von einer Temperatur des heißen Abgases im Windsichter, vorzugsweise im Bereich zumindest einer Sichterblende des Windsichters, erfolgt;
- Erhitzen des im Pyrolyseinnenraum des Pyrolysereaktors befindlichen festen Brennstoffs durch Wärmeübertragung infolge eines direkten Kontakts mit dem aufsteigenden heißen Abgas bei gleichzeitiger Abkühlung des heißen Abgases, bis eine Pyrolysetemperatur im Pyrolyseinnenraum von höchstens 600°C, vorzugsweise von höchstens 500°C, besonders bevorzugt von höchstens 450°C, eingestellt wird, wobei eine Regelung der Pyrolysetemperatur abhängig von der Dosiermenge der dem Vergaserinnenraum zugeführten Verbrennungsluft sowie abhängig von der Dosiermenge des zugeführten ersten festen Brennstoffs erfolgt;
- Abführen von Pyrolysegas aus dem Pyrolyseinnenraum und Abscheiden von Feststoffpartikeln aus dem Pyrolysegas mittels Feststoffabscheider, wobei ein gereinigtes Produktgas mit einer Austrittstemperatur von höchstens 450°C, vorzugsweise von höchstens 420°C, besonders bevorzugt von höchstens 400°C, bei einem Überdruck von mindestens 1,5 bar erhalten wird, wobei eine Regelung der Austrittstemperatur des gereinigten Produktgases aus dem Feststoffabscheider abhängig von der Dosiermenge der dem Vergaserinnenraum zugeführten Verbrennungsluft sowie abhängig von der Dosiermenge des dem Pyrolyseinnenraum zugeführten ersten festen Brennstoffs erfolgt und die Druckeinstellung abhängig von der Dosiermenge der zugeführten Verbrennungsluft erfolgt.

Mit dieser Steuerung kann eine erfindungsgemäße Vorrichtung besonders flexibel gesteuert werden, um feste Brennstoffe, vorzugsweise feste Sekundärbrennstoffe enthaltend feste Abfallstoffe, möglichst energieeffizient zu gereinigtem Produktgas mit möglichst hohem Heizwert umzuwandeln. Die Gasaustrittstemperatur des gereinigten Produktgases kann vorteilhaft über die Dosiermenge der zugeführten Verbrennungsluft in den Vergaserinnenraum des Vergasungsreaktors geregelt werden.

In einer vorteilhaften Weiterbildung der Vorrichtung kann vorgesehen sein, dass die Steuerung dazu eingerichtet ist, im Betriebszustand der Vorrichtung im Windsichter eine Gasgeschwindigkeit im Bereich zumindest einer, vorzugsweise justierbaren, Sichterblende des Windsichters von 10 m/s bis 40 m/s, besonders bevorzugt von 15 m/s bis 30 m/s, einzustellen, wobei die Einstellung der Gasgeschwindigkeit im Windsichter abhängig von der Dosiermenge der zugeführten Verbrennungsluft erfolgt.

Die Gasgeschwindigkeit im Bereich der zumindest einen Sichterblende des Windsichters wird dabei im laufenden Betrieb der Vorrichtung so geregelt, dass nicht pyrolysierte, leichte Brennstoffanteile bzw. Feingutpartikel wieder in den Pyrolyseinnenraum des oberen Pyrolysereaktors gelangen, während schwere Brennstoffanteile bzw. Grobgutpartikel entgegen der Strömungsrichtung des im Windsichter aufsteigenden Vergaserabgases durch den Windsichter hindurch in den Vergaserinnenraum gelangen, um dort erneut verbrannt bzw. vergast zu werden.

### KURZE BESCHREIBUNG DER FIGUR

Die Erfindung wird nun anhand von Ausführungsbeispielen näher erläutert. Die Zeichnung ist beispielhaft und soll den Erfindungsgedanken zwar darlegen, ihn aber keinesfalls einengen oder gar abschließend wiedergeben.

Dabei zeigt:

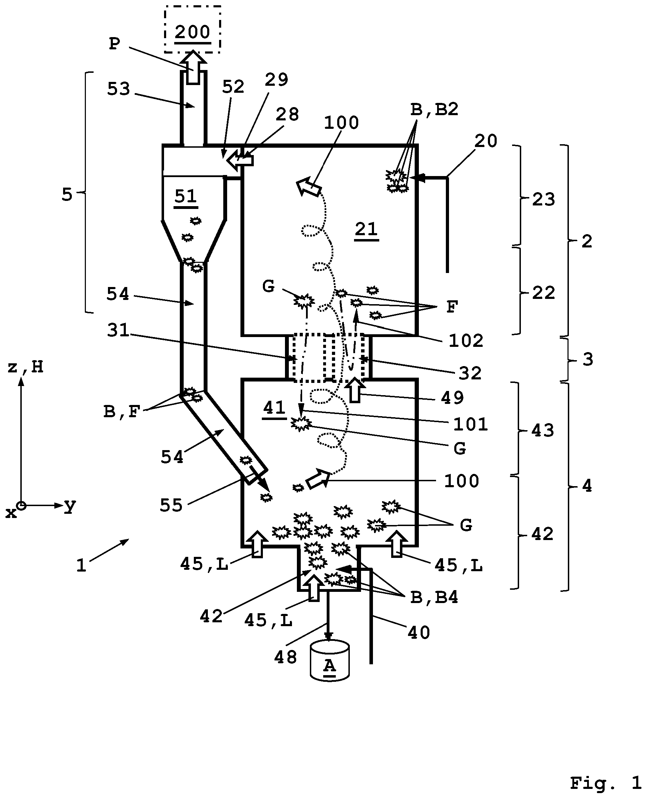

- Fig. 1: eine schematische Darstellung einer ersten Ausführung einer Vorrichtung zur Pyrolyse gemäß der Erfindung.

### WEGE ZUR AUSFÜHRUNG DER ERFINDUNG

Fig. 1 zeigt in einer schematischen Darstellung in teilweiser Schnittansicht von der Seite eine erste Ausführung einer erfindungsgemäßen Pyrolysevorrichtung 1, die einen Pyrolysereaktor 2, einen Windsichter 3, einen Vergasungsreaktor 4 sowie einen Feststoffabscheider 5 umfasst. Der Windsichter 3 ist dabei zwischen dem Pyrolysereaktor 2, der hier beispielsweise in Form eines Flugstromreaktors ausgeführt ist, und dem Vergasungsreaktor 4, der hier beispielsweise als Wirbelschichtvergaser ausgeführt ist, angeordnet. Der Feststoffabscheider 5, der hier als Fliehkraftabscheider, beispielsweise als Zyklonabscheider, ausgeführt ist, ist dabei dem Pyrolysereaktor 2 nachgeordnet.

Der Pyrolysereaktor 2 weist einen Pyrolyseinnenraum 21 mit einer ersten Brennstoff-Zufuhreinrichtung 20 in den Pyrolyseinnenraum 21 auf, wobei die erste Brennstoff-Zufuhreinrichtung 20 durch einen Pfeil 20 symbolisiert ist. In einer Höhenrichtung H gesehen, die einer positiven z-Achsenrichtung in einem kartesischen Koordinatensystem entspricht, kann der Pyrolyseinnenraum 21 von unten nach oben in eine untere Innenraumzone 22 sowie in eine daran anschließende obere Innenraumzone 23 des Pyrolysereaktors 2 unterteilt werden, wobei im Bereich der oberen Innenraumzone 23 eine Auslassöffnung 28 für Pyrolysegas 29 in der Behälterwandung des Pyrolysereaktors 2 vorgesehen ist. Die Strömungsrichtung des im laufenden Betriebszustand der Vorrichtung 1 aus der Auslassöffnung 28 des Pyrolysereaktors 2 austretenden Pyrolysegases 29 ist durch einen Pfeil 29 symbolisiert.

Der in Fig. 1 veranschaulichte Windsichter 3 weist hier beispielsweise zwei Sichterblenden auf, nämlich eine erste Sichterblende 31, die einen ersten Sichterraum bildet, sowie eine zweite Sichterblende 32, die einen zweiten Sichterraum des Windsichters 3 bildet.

Der Vergasungsreaktor 4 weist einen Vergaserinnenraum 41 mit einer zweiten Brennstoff-Zufuhreinrichtung 40 in den Vergaserinnenraum 41 auf, wobei die zweite Brennstoff-Zufuhreinrichtung 40 durch einen Pfeil 40 symbolisiert ist. In Höhenrichtung H gesehen kann der Vergaserinnenraum 41 von unten nach oben in eine untere Innenraumzone 42 sowie in eine daran anschließende obere Innenraumzone 43 des Vergasungsreaktors 4 unterteilt werden. Im Bereich der unteren Innenraumzone 42 des Vergasungsreaktors 4, also an einem unteren Abschnitt des Vergasungsreaktors 4, befinden sich mehrere Einlassöffnungen 45 für eine Luftzufuhr von außen in den Vergaserinnenraum 41, wobei die Richtung der Luftzufuhr L jeweils durch Pfeile L symbolisiert ist. Außerdem ist in der unteren Innenraumzone 42 ein Ascheaustrag 48 für das Ausschleusen von nicht brennbarem Ascheanteil A aus der Vorrichtung 1 vorgesehen. Der Ascheaustrag 48 ist durch einen Pfeil 48 in Richtung eines schematischen Sammelbehälters zur Aufnahme der Asche A symbolisiert.

Die obere Innenraumzone 43 des Vergasungsreaktors 4 ist nach oben hin zum Windsichter 3 geöffnet. In Höhenrichtung H gesehen ist der Vergaserinnenraum 41 des unterhalb des Windsichters 3 angeordneten Vergasungsreaktors 4 mittels des zwischen dem Pyrolysereaktor 2 und dem Vergasungsreaktor 4 angeordneten Windsichters 3 mit dem Pyrolyseinnenraum 21 des Pyrolysereaktors 2, der oberhalb des Windsichters 3 angeordnet ist, kommunizierend verbunden.

Im laufenden Betriebszustand der Vorrichtung 1 kann Abgas 49 aus dem Vergaserinnenraum 41 des Vergasungsreaktors 4 in Höhenrichtung H gesehen entsprechend der Pfeilrichtung 49 nach oben durch den Windsichter 3 hindurch aufsteigen und so in den Pyrolyseinnenraum 21 des Pyrolysereaktors 2 gelangen.

Der hier gezeigte Feststoffabscheider 5 in Form eines Zyklonabscheiders weist einen Innenraum 51 auf, eine Zufuhrleitung 52 für Pyrolysegas 29, eine Produktgasleitung 53 für gereinigtes Produktgas P, das möglichst frei von Feststoffpartikeln B ist, sowie eine Rückführleitung 54 für aus dem Pyrolysegas 29 abgetrennte Feststoffpartikel B, insbesondere für Feingutpartikel F. Die Zufuhrleitung 52 für Pyrolysegas 29 ist mit dem Auslass 28 des Pyrolysereaktors 2 fluidisch bzw. strömungstechnisch verbunden. Die Rückführleitung 54 zur Brennstoffrückführung 55, die durch einen Pfeil 55 in Förderrichtung der rückgeführten, abgeschiedenen Feststoffpartikel B symbolisiert ist, ist mit dem Vergaserinnenraum 41 fluidisch bzw. strömungstechnisch verbunden und mündet auch in diesen Vergaserinnenraum 41.

Der Feststoffabscheider 5 ist dazu eingerichtet, in einem Betriebszustand der Vorrichtung 1 das Pyrolysegas 29 von Feststoffpartikeln B zu reinigen und so ein gereinigtes Produktgas P zu erzeugen, welches einem externen Brenner 200, insbesondere einem Brenner 200 einer Drehofenanlage, zuführbar ist.

In Fig.1 bezeichnet das Bezugszeichen A die abgeschiedene Asche A, sowie das Bezugszeichen B den der Vorrichtung 1 zugeführten festen Brennstoff B bzw. Feststoffpartikel B des Brennstoffes. Vorzugsweise werden als fester Brennstoff B Sekundärbrennstoffe eingesetzt, die feste Abfallstoffe enthalten. Je nach individueller Anforderung und Verfügbarkeit von Brennstoffen können dem Pyrolysereaktor 2 sowie dem Vergasungsreaktor 4 beispielsweise jeweils dieselben Brennstoffe B zugeführt werden. Alternativ dazu können wahlweise dem Pyrolysereaktor 2 sowie dem Vergasungsreaktor 4 jeweils auch unterschiedliche Brennstoffe B oder Brennstoffe B mit jeweils unterschiedlicher Zusammensetzung an Abfallstoffen zugesetzt werden, wobei ein erster Brennstoff B2 für die Zufuhr in den Pyrolysereaktor 2 sowie ein zweiter Brennstoff B4 für die Zufuhr in den Vergasungsreaktor 4 vorgesehen sein können.

Zur Veranschaulichung der Strömungsverhältnisse der Gasströmung im laufenden Betriebszustand der Vorrichtung 1 ist als punktierte Linie mit Pfeilen 100 ein beispielhafter Strömungspfad 100 des aufsteigenden Abgases 49 im Vergaserinnenraum 41 bzw. des Pyrolysegases 29 im Pyrolyseinnenraum 21 angedeutet.

Mit strichpunktierten Linien sind außerdem im Bereich des Windsichters 3 beispielhafte Strömungspfade von festen Brennstoffpartikeln im laufenden Betriebszustand der Vorrichtung 1 skizziert, wobei mit dem Pfeil 101 ein Strömungspfad 101 eines Grobgutpartikels G, und mit dem Pfeil 102 ein Strömungspfad 102 eines Feingutpartikels F symbolisiert sind. Als Grobgutpartikel G werden vergleichsweise schwerere bzw. größere Feststoffpartikel B bezeichnet, also jene festen Brennstoffpartikel B mit größerem äquivalenten Partikeldurchmesser bzw. mit größerer Masse, die im laufenden Betriebszustand der Vorrichtung 1 entgegen der Pfeilrichtung 101 des Strömungspfads 101 des aufsteigenden Abgases 49 bzw. Pyrolysegases 29 nach unten absinken.

Als Feingutpartikel F werden hingegen jene vergleichsweise leichten bzw. kleinen festen Brennstoffpartikel B bezeichnet, die im laufenden Betriebszustand der Vorrichtung 1 in Richtung 101 des Strömungspfads 101 mit dem aufsteigenden Abgas 49 nach oben mitgerissen werden und durch den Windsichter 3 hindurch in den Pyrolyseinnenraum 21 gelangen bzw. gegebenenfalls noch weiter mit dem Pyrolysegas 29 aus dem Pyrolyseinnenraum 21 ausgetragen werden und vom Feststoffabscheider 5 abgetrennt werden müssen, um mit der Brennstoffrückführung 55 wiederum in den Vergaserinnenraum 41 zurückgeführt zu werden.

### BEZUGSZEICHENLISTE

- 1: Pyrolysevorrichtung
- 2: Pyrolysereaktor; Flugstromreaktor
- 20: (erste) Brennstoffzufuhr für den Pyrolysereaktor (Pfeil)
- 21: Pyrolyseinnenraum des Pyrolysereaktors
- 22: untere Innenraumzone des Pyrolysereaktors
- 23: obere Innenraumzone des Pyrolysereaktors
- 28: Auslassöffnung für Pyrolysegas
- 29: Pyrolysegas (Pfeil)
- 3: Windsichter
- 31: (erste) Sichterblende; Sichterraum
- 32: (zweite) Sichterblende; Sichterraum
- 4: Vergasungsreaktor; Wirbelschichtvergaser
- 40: (zweite) Brennstoffzufuhr für den Vergasungsreaktor (Pfeil)
- 41: Vergaserinnenraum des Vergasungsreaktors
- 42: untere Innenraumzone des Vergasungsreaktors
- 43: obere Innenraumzone des Vergasungsreaktors
- 45: Einlassöffnung für Luftzufuhr
- 48: Ascheaustrag (Pfeil)
- 49: Abgas aus Vergasungsreaktor (Pfeil)
- 5: Feststoffabscheider; Fliehkraftabscheider; Zyklonabscheider
- 51: Innenraum des Zyklonabscheiders
- 52: Zufuhrleitung für Pyrolysegas
- 53: Produktgasleitung
- 54: Rückführleitung für Feststoffpartikel
- 55: Brennstoffrückführung (Pfeil)
- 100: Strömungsrichtung des Pyrolysegases (Pfeil)
- 101: Strömungsrichtung von Grobgutpartikel (Pfeil)
- 102: Strömungsrichtung von Feingutpartikel (Pfeil)
- 200: Ofenbrenner eines Drehofens
- A: Asche
- B: fester Brennstoff, Feststoffpartikel
- B2: (erster) Brennstoff für Pyrolysereaktor
- B4: (zweiter) Brennstoff für Vergasungsreaktor
- G: Grobgutpartikel
- F: Feingutpartikel
- H: Höhe (Pfeil)
- L: Verbrennungsluft (Pfeil)
- P: Gereinigtes Produktgas (Pfeil)
- x,y,z: Achsenrichtungen

## Patentansprüche

1. Vorrichtung (1) zur Pyrolyse von Brennstoff (B,B2,B4) für die Beheizung eines Brenners (200), insbesondere eines Brenners einer Drehofenanlage, umfassend einen Pyrolysereaktor (2), einen Vergasungsreaktor (4), einen zwischen dem Pyrolysereaktor (2) und dem Vergasungsreaktor (4) angeordneten Windsichter (3), sowie einen dem Pyrolysereaktor (2) nachgeordneten Feststoffabscheider (5), bevorzugt Fliehkraftabscheider, besonders bevorzugt Zyklonabscheider, wobei der Pyrolysereaktor (2) einen Pyrolyseinnenraum (21) mit einer ersten Brennstoff-Zufuhreinrichtung (20) in den Pyrolyseinnenraum (21) aufweist, wobei der Vergasungsreaktor (4) einen Vergaserinnenraum (41) mit einer zweiten Brennstoff-Zufuhreinrichtung (40) sowie mit zumindest einer Luftzufuhreinrichtung (45) in den Vergaserinnenraum (41) aufweist, wobei der Vergasungsreaktor (4) in einer Höhenrichtung (H) gesehen unterhalb des Pyrolysereaktors (2) angeordnet ist, und wobei der Pyrolyseinnenraum (21) des Pyrolysereaktors (2) mittels des zwischen dem Pyrolysereaktor (2) und dem Vergasungsreaktor (4) angeordneten Windsichters (3) mit dem Vergaserinnenraum (41) des darunterliegenden Vergasungsreaktors (4) kommunizierend verbunden ist, wobei ein Auslass (28) des Pyrolysereaktors (2) für Pyrolysegas (29) aus dem Pyrolyseinnenraum (21) vorgesehen ist, wobei der Auslass (28) mit dem nachgeordneten Feststoffabscheider (5) fluidisch verbunden (52) ist, und wobei der Feststoffabscheider (5) dazu eingerichtet ist, in einem Betriebszustand der Vorrichtung (1) das Pyrolysegas (29) zu reinigen und so ein gereinigtes Produktgas (P) zu erzeugen, welches dem Brenner (200) zuführbar ist, wobei der Feststoffabscheider (5) eine Zufuhrleitung (52) für Pyrolysegas (29), eine Produktgasleitung (53) für die Zufuhr von gereinigtem Produktgas (P) zum Brenner (200) sowie eine Rückführleitung (54) für aus dem Pyrolysegas (29) abgetrennte Feststoffpartikel (B), insbesondere für Feingutpartikel (F), aufweist, und wobei die Zufuhrleitung (52) für Pyrolysegas (29) mit dem Auslass (28) des Pyrolysereaktors (2) fluidisch verbunden ist, wobei der Auslass (28) vorzugsweise in einer oberen Innenraumzone (23) des Pyrolysereaktors (2) angeordnet ist, und wobei die Rückführleitung (54) zur Brennstoffrückführung (55) mit dem Vergaserinnenraum (41) fluidisch verbunden ist und vorzugsweise in diesen (41) mündet.

2. Vorrichtung (1) nach Anspruch 1, **dadurch gekennzeichnet, dass** die erste Brennstoff-Zufuhreinrichtung (20) sowie die zweite Brennstoff-Zufuhreinrichtung (40) jeweils dazu eingerichtet sind, im Betriebszustand der Vorrichtung (1) feste Brennstoffe (B,B2,B4), vorzugsweise feste Sekundärbrennstoffe (B,B2,B4) enthaltend feste Abfallstoffe, zu befördern, wobei die erste Brennstoff-Zufuhreinrichtung (20) dazu eingerichtet ist, im Betriebszustand der Vorrichtung (1) einen ersten festen Brennstoff (B,B2) für den Pyrolysereaktor (2) in den Pyrolyseinnenraum (21) zu dosieren, und die zweite Brennstoff-Zufuhreinrichtung (40) dazu eingerichtet ist, im Betriebszustand der Vorrichtung (1) einen zweiten festen Brennstoff (B,B4) für den Vergasungsreaktor (4) in den Vergaserinnenraum (41) zu dosieren.

3. Vorrichtung (1) nach Anspruch 1 oder 2, **dadurch gekennzeichnet, dass** die zumindest eine Luftzufuhreinrichtung (45) dazu eingerichtet ist, im Betriebszustand der Vorrichtung (1) Verbrennungsluft (L) in den Vergaserinnenraum (41), vorzugsweise in eine in Höhenrichtung (H) gesehen untere Innenraumzone (42) des Vergaserinnenraums (41), zu dosieren.

4. Vorrichtung (1) nach einem der Ansprüche 1 bis 3, **dadurch gekennzeichnet, dass** der Vergasungsreaktor (4) dazu eingerichtet ist, im Betriebszustand der Vorrichtung (1) mit Druck beaufschlagt zu werden und den in seinem Vergaserinnenraum (41) befindlichen Brennstoff (B,B4) unter Zufuhr (45) von Verbrennungsluft (L) bei einer Vergasungstemperatur von 700°C bis 950°C, vorzugsweise von 750°C bis 900°C, autotherm zu vergasen, wobei der Vergasungsreaktor (4) vorzugsweise ein Wirbelschichtvergaser ist.

5. Vorrichtung (1) nach einem der Ansprüche 1 bis 4, **dadurch gekennzeichnet, dass** der Vergasungsreaktor (4) dazu eingerichtet ist, im Betriebszustand der Vorrichtung (1) mit einem Überdruck von 0,5 bar bis 20 bar, vorzugsweise von 0,8 bar bis 10 bar, beaufschlagt zu werden.

6. Vorrichtung (1) nach einem der Ansprüche 1 bis 5, **dadurch gekennzeichnet, dass** der Pyrolysereaktor (2) dazu eingerichtet ist, im Betriebszustand der Vorrichtung (1) den in seinem Pyrolyseinnenraum (21) befindlichen Brennstoff (B,B2) gemeinsam mit heißem Abgas (49), welches dem Pyrolysereaktor (2) aus dem Vergasungsreaktor (4) durch den Windsichter (3) hindurch zuführbar ist, bei einer Pyrolysetemperatur von höchstens 600°C, vorzugsweise von höchstens 500°C, besonders bevorzugt von höchstens 450°C, zu pyrolysieren, wobei der Pyrolysereaktor (2) vorzugsweise ein Flugstromreaktor ist.

7. Vorrichtung (1) nach einem der Ansprüche 1 bis 6, **dadurch gekennzeichnet, dass** der Windsichter (3) zumindest eine Sichterblende (31,32), vorzugsweise zumindest eine justierbare Sichterblende (31,32), aufweist, und wobei der Windsichter (3) dazu eingerichtet ist, im Betriebszustand der Vorrichtung (1) Feststoffpartikel (B) des Brennstoffs in Grobgutpartikel (G), die vom Pyrolysereaktor (2) entgegen der Höhenrichtung (H) nach unten in den Vergasungsreaktor (4) gelangen können, sowie in Feingutpartikel (F), die leichter sind als Grobgutpartikel (G) und die in Höhenrichtung (H) nach oben in den Pyrolysereaktor (2) gelangen können, zu klassieren, wobei im Betriebszustand der Vorrichtung (1) vorzugsweise eine Gasgeschwindigkeit im Bereich der zumindest einen Sichterblende (31,32) von 10 m/s bis 40 m/s, besonders bevorzugt von 15 m/s bis 30 m/s, einstellbar ist.

8. Verfahren zur Pyrolyse von Brennstoff (B) für die Beheizung eines Brenners (200), insbesondere eines Brenners einer Drehofenanlage, das Verfahren umfassend die folgenden Schritte:
- Bereitstellen einer Vorrichtung (1) nach einem der Ansprüche 1 bis 7;
- Bereitstellen und dosiertes Zuführen eines ersten festen Brennstoffs (B,B2), vorzugsweise eines ersten festen Sekundärbrennstoffs (B,B2) enthaltend feste Abfallstoffe, mit der ersten Brennstoff-Zufuhreinrichtung (20) in den Pyrolyseinnenraum (21) des Pyrolysereaktors (2);
- Bereitstellen und dosiertes Zuführen eines zweiten festen Brennstoffs (B,B4), vorzugsweise eines zweiten festen Sekundärbrennstoffs (B,B2) enthaltend feste Abfallstoffe, mit der zweiten Brennstoff-Zufuhreinrichtung (40) in den Vergaserinnenraum (41) des Vergasungsreaktors (4);
- Bereitstellen und dosiertes Zuführen von Verbrennungsluft (L) mit zumindest einer Luftzufuhreinrichtung (45) in den Vergaserinnenraum (41);
- gegebenenfalls Entzünden des im Vergaserinnenraum (41) befindlichen festen Brennstoffs (B,B4) bei gleichzeitiger Zufuhr von Verbrennungsluft (L) in den Vergaserinnenraum (41);
- Einstellen einer Vergasungstemperatur im Vergaserinnenraum (41) von 700°C bis 950°C, vorzugsweise von 750°C bis 900°C;
- Einstellen eines Überdrucks im Vergaserinnenraum (41) von 0,5 bar bis 20 bar, vorzugsweise von 0,8 bar bis 10 bar;
- Führen von heißem Abgas (49), welches Abgas (49) bei der Vergasung des im Vergaserinnenraum (41) befindlichen Brennstoffs (B,B4) entsteht, aus dem Vergaserinnenraum (41) durch den Windsichter (3) hindurch in den oberhalb des Windsichters (3) angeordneten Pyrolyseinnenraum (21) des Pyrolysereaktors (2);
- Erhitzen des im Pyrolyseinnenraum (21) des Pyrolysereaktors (2) befindlichen festen Brennstoffs (B,B2) durch Wärmeübertragung infolge eines direkten Kontakts mit dem aufsteigenden heißen Abgas (49) bei gleichzeitiger Abkühlung des heißen Abgases (49);
- Einstellen einer Pyrolysetemperatur im Pyrolyseinnenraum (21) von höchstens 600°C, vorzugsweise von höchstens 500°C, besonders bevorzugt von höchstens 450°C;
- Abführen von Pyrolysegas (29) aus dem Pyrolyseinnenraum (21) und Abscheiden von Feststoffpartikeln (B,F) aus dem Pyrolysegas (29), wobei ein gereinigtes Produktgas (P) erhalten wird, das dem Benner (200) zugeführt (53) werden kann;
- Abscheiden von Feststoffpartikeln (B,F) aus dem Pyrolysegas (29) in einem Feststoffabscheider (5), vorzugsweise in einem Fliehkraftabscheider, besonders bevorzugt in einem Zyklonabscheider, wobei aus dem Pyrolysegas (29) abgetrennte Feststoffpartikel (B), insbesondere Feingutpartikel (F), in den Vergaserinnenraum (41) zurückgeführt (55) werden.

9. Verfahren nach Anspruch 8, **dadurch gekennzeichnet, dass** eine gleiche Brennstoffzusammensetzung für den ersten festen Brennstoff (B,B2) und den zweiten festen Brennstoff (B,B4) ausgewählt wird, oder dass eine Brennstoffzusammensetzung für den ersten festen Brennstoff (B,B2) ausgewählt wird mit einem größeren Anteil an Kunststoff, vorzugsweise Kunststofffolien, als für den zweiten festen Brennstoff (B,B4).

10. Verfahren nach Anspruch 8 oder 9, **dadurch gekennzeichnet, dass** im Betrieb der Vorrichtung (1) im Windsichter (3) eine Gasgeschwindigkeit im Bereich zumindest einer, vorzugsweise justierbaren, Sichterblende (31,32) des Windsichters (3) von 10 m/s bis 40 m/s, besonders bevorzugt von 15 m/s bis 30 m/s, eingestellt wird.

11. Verfahren nach einem der Ansprüche 8 bis 10, **dadurch gekennzeichnet, dass** das gereinigte Produktgas (P) beim Austritt aus dem Feststoffabscheider (5) mit einer Austrittstemperatur von höchstens 450°C, vorzugsweise von höchstens 420°C, besonders bevorzugt von höchstens 400°C, mit einem Überdruck von zumindest 1,5 bar sowie mit einem Heizwert des gereinigten Produktgases (P) von zumindest 11 MJ/Nm³, vorzugsweise zumindest 13 MJ/Nm³, besonders bevorzugt zumindest 15 MJ/Nm³, erhalten wird.

12. Vorrichtung (1) nach einem der Ansprüche 1 bis 7 umfassend eine Steuerung, **dadurch gekennzeichnet, dass** die Steuerung zur Durchführung der folgenden Verfahrensschritte eingerichtet ist:
- Dosieren eines bereitgestellten ersten festen Brennstoffs (B,B2), vorzugsweise eines ersten festen Sekundärbrennstoffs (B,B2) enthaltend feste Abfallstoffe, mit der ersten Brennstoff-Zufuhreinrichtung (20) in den Pyrolyseinnenraum (21) des Pyrolysereaktors (2);
- Dosieren eines bereitgestellten zweiten festen Brennstoffs (B,B4), vorzugsweise eines zweiten festen Sekundärbrennstoffs (B,B2) enthaltend feste Abfallstoffe, mit der zweiten Brennstoff-Zufuhreinrichtung (40) in den Vergaserinnenraum (41) des Vergasungsreaktors (4);
- Dosieren von bereitgestellter Verbrennungsluft (L) mit der zumindest einen Luftzufuhreinrichtung (45) in den Vergaserinnenraum (41);
- gegebenenfalls Entzünden des im Vergaserinnenraum (41) befindlichen festen Brennstoffs (B,B4) bei gleichzeitiger Zufuhr von Verbrennungsluft (L) in den Vergaserinnenraum (41);
- Einstellen einer Vergasungstemperatur im Vergaserinnenraum (41) von 700°C bis 950°C, vorzugsweise von 750°C bis 900°C, wobei eine Temperaturregelung der Vergasungstemperatur abhängig von einer Dosiermenge des zugeführten zweiten festen Brennstoffs (B,B4) sowie abhängig von einer Dosiermenge der zugeführten Verbrennungsluft (L) in den Vergaserinnenraum (41) erfolgt;
- Einstellen eines Überdrucks im Vergaserinnenraum (41) von 0,5 bar bis 20 bar, vorzugsweise von 0,8 bar bis 10 bar, wobei eine Druckeinstellung abhängig von der Dosiermenge der zugeführten Verbrennungsluft (L) erfolgt;
- Führen von heißem Abgas (49) aus dem Vergaserinnenraum (41) durch den Windsichter (3) hindurch in den oberhalb des Windsichters (3) angeordneten Pyrolyseinnenraum (21) des Pyrolysereaktors (2), wobei eine Regelung der Dosiermenge des zugeführten zweiten festen Brennstoffs (B,B4) sowie eine Regelung der Dosiermenge der zugeführten Verbrennungsluft (L) abhängig von einer Temperatur des heißen Abgases (49) im Windsichter (3), vorzugsweise im Bereich zumindest einer Sichterblende (31,32) des Windsichters (3), erfolgt;
- Erhitzen des im Pyrolyseinnenraum (21) des Pyrolysereaktors (2) befindlichen festen Brennstoffs (B,B2) durch Wärmeübertragung infolge eines direkten Kontakts mit dem aufsteigenden heißen Abgas (49) bei gleichzeitiger Abkühlung des heißen Abgases (49), bis eine Pyrolysetemperatur im Pyrolyseinnenraum (21) von höchstens 600°C, vorzugsweise von höchstens 500°C, besonders bevorzugt von höchstens 450°C, eingestellt wird, wobei eine Regelung der Pyrolysetemperatur abhängig von der Dosiermenge der dem Vergaserinnenraum (41) zugeführten Verbrennungsluft (L) sowie abhängig von der Dosiermenge des zugeführten ersten festen Brennstoffs (B,B2) erfolgt;
- Abführen von Pyrolysegas (29) aus dem Pyrolyseinnenraum (21) und Abscheiden von Feststoffpartikeln (B,F) aus dem Pyrolysegas (29) mittels Feststoffabscheider (5), wobei ein gereinigtes Produktgas (P) mit einer Austrittstemperatur von höchstens 450°C, vorzugsweise von höchstens 420°C, besonders bevorzugt von höchstens 400°C, bei einem Überdruck von mindestens 1,5 bar erhalten wird, wobei eine Regelung der Austrittstemperatur des gereinigten Produktgases (P) aus dem Feststoffabscheider (5) abhängig von der Dosiermenge der dem Vergaserinnenraum (41) zugeführten Verbrennungsluft (L) sowie abhängig von der Dosiermenge des dem Pyrolyseinnenraum (21) zugeführten ersten festen Brennstoffs (B,B2) erfolgt und die Druckeinstellung abhängig von der Dosiermenge der zugeführten Verbrennungsluft (L) erfolgt.

13. Vorrichtung (1) nach Anspruch 12, **dadurch gekennzeichnet, dass** die Steuerung dazu eingerichtet ist, im Betriebszustand der Vorrichtung (1) im Windsichter (3) eine Gasgeschwindigkeit im Bereich zumindest einer, vorzugsweise justierbaren, Sichterblende (31,32) des Windsichters (3) von 10 m/s bis 40 m/s, besonders bevorzugt von 15 m/s bis 30 m/s, einzustellen, wobei die Einstellung der Gasgeschwindigkeit im Windsichter (3) abhängig von der Dosiermenge der zugeführten Verbrennungsluft (L) erfolgt.

## Claims

1. Device (1) for the pyrolysis of fuel (B, B2, B4) for heating a burner (200), in particular a burner of a rotary kiln plant, comprising a pyrolysis reactor (2), a gasification reactor (4), an air classifier (3) arranged between the pyrolysis reactor (2) and the gasification reactor (4), and a solids separator (5) arranged downstream of the pyrolysis reactor (2), preferably a centrifugal separator, particularly preferably a cyclone separator, wherein the pyrolysis reactor (2) has a pyrolysis interior (21) with a first fuel feed device (20) into the pyrolysis interior (21), wherein the gasification reactor (4) has a gasifier interior (41) with a second fuel feed device (40) and with at least one air feed device (45) into the gasifier interior (41), wherein the gasification reactor (4) is arranged below the pyrolysis reactor (2) as viewed in a height direction (H), and wherein the pyrolysis interior (21) of the pyrolysis reactor (2) is communicatively connected to the gasifier interior (41) of the gasification reactor (4) below by means of the air classifier (3) arranged between the pyrolysis reactor (2) and the gasification reactor (4), wherein an outlet (28) of the pyrolysis reactor (2) is provided for pyrolysis gas (29) from the pyrolysis interior (21), wherein the outlet (28) is fluidically connected (52) to the downstream solids separator (5), and wherein the solids separator (5) is set up to purify the pyrolysis gas (29) in an operating state of the device (1) and thus to produce a purified product gas (P) which can be fed to the burner (200), wherein the solids separator (5) has a feed line (52) for pyrolysis gas (29), a product gas line (53) for the supply of purified product gas (P) to the burner (200) and a return line (54) for solid particles (B) separated from the pyrolysis gas (29), in particular for fine material particles (F), and wherein the feed line (52) for pyrolysis gas (29) is fluidically connected to the outlet (28) of the pyrolysis reactor (2), wherein the outlet (28) is preferably arranged in an upper interior zone (23) of the pyrolysis reactor (2), and wherein the return line (54) for fuel return (55) is fluidically connected to the gasifier interior (41) and preferably opens into the latter (41).

2. Device (1) according to claim 1, **characterized in that** the first fuel feed device (20) and the second fuel feed device (40) are each set up to convey solid fuels (B, B2, B4), preferably solid secondary fuels (B, B2, B4) containing solid waste materials, in the operating state of the device (1), wherein the first fuel feed device (20) is set up to meter a first solid fuel (B, B2) for the pyrolysis reactor (2) into the pyrolysis interior (21) in the operating state of the device (1), and the second fuel feed device (40) is set up to meter a second solid fuel (B, B4) for the gasification reactor (4) into the gasifier interior (41) in the operating state of the device (1).

3. Device (1) according to claim 1 or 2, **characterized in that** the at least one air feed device (45) is set up to meter combustion air (L) into the gasifier interior (41) in the operating state of the device (1), preferably into a lower interior zone (42) of the gasifier interior (41) as viewed in the height direction (H).

4. Device (1) according to one of claims 1 to 3, **characterized in that** the gasification reactor (4) is set up to be pressurized in the operating state of the device (1) and to autothermally gasify the fuel (B, B4) located in its gasifier interior (41) with a supply (45) of combustion air (L) at a gasification temperature of 700°C to 950°C, preferably from 750°C to 900°C, wherein the gasification reactor (4) is preferably a fluidized bed gasifier.

5. Device (1) according to one of claims 1 to 4, **characterized in that** the gasification reactor (4) is set up to be subjected to an overpressure of 0.5 bar to 20 bar, preferably from 0.8 bar to 10 bar, in the operating state of the device (1).

6. Device (1) according to one of claims 1 to 5, **characterized in that** the pyrolysis reactor (2) is set up, in the operating state of the device (1), to feed the fuel (B, B2) located in its pyrolysis interior (21) together with hot flue gas (49), which can be fed to the pyrolysis reactor (2) from the gasification reactor (4) through the air classifier (3), at a pyrolysis temperature of at most 600°C, preferably of at most 500°C, particularly preferably of at most 450°C, wherein the pyrolysis reactor (2) is preferably an entrained-flow reactor.

7. Device (1) according to one of claims 1 to 6, **characterized in that** the air classifier (3) has at least one classifier aperture (31, 32), preferably at least one adjustable classifier aperture (31, 32), and wherein the air classifier (3) is set up, in the operating state of the device (1), to classify solid particles (B) of the fuel into coarse material particles (G) which can pass from the pyrolysis reactor (2) downwards into the gasification reactor (4) against the height direction (H), and into fine material particles (F) which are lighter than coarse material particles (G) and which can pass upwards in the height direction (H) into the pyrolysis reactor (2), wherein a gas velocity of 10 m/s to 40 m/s, particularly preferably from 15 m/s to 30 m/s, can preferably be set in the region of the at least one classifier aperture (31, 32) in the operating state of the device (1).

8. Method for the pyrolysis of fuel (B) for heating a burner (200), in particular a burner of a rotary kiln plant, the method comprising the following steps of:
- providing a device (1) according to one of claims 1 to 7;
- providing and metered feeding of a first solid fuel (B, B2), preferably a first solid secondary fuel (B, B2) containing solid waste materials, with the first fuel feed device (20) into the pyrolysis interior (21) of the pyrolysis reactor (2);
- providing and metered feeding of a second solid fuel (B, B4), preferably a second solid secondary fuel (B, B2) containing solid waste materials, with the second fuel feed device (40) into the gasifier interior (41) of the gasification reactor (4);
- providing and metered feeding of combustion air (L) with at least one air feed device (45) into the gasifier interior (41);
- optionally, ignition of the solid fuel (B, B4) in the gasifier interior (41) with simultaneous supply of combustion air (L) into the gasifier interior (41);
- setting a gasification temperature in the gasifier interior (41) of 700°C to 950°C, preferably from 750°C to 900°C;
- setting an overpressure in the gasifier interior (41) of 0.5 bar to 20 bar, preferably from 0.8 bar to 10 bar;
- conducting hot flue gas (49), which flue gas (49) is produced during the gasification of the fuel (B, B4) located in the gasifier interior (41), from the gasifier interior (41) through the air classifier (3) into the pyrolysis interior (21) of the pyrolysis reactor (2) arranged above the air classifier (3);
- heating of the solid fuel (B, B2) located in the pyrolysis interior (21) of the pyrolysis reactor (2) by heat transfer as a result of direct contact with the rising hot flue gas (49) and simultaneous cooling of the hot flue gas (49);
- setting a pyrolysis temperature in the pyrolysis interior (21) of at most 600°C, preferably of at most 500°C, particularly preferably of at most 450°C;
- removal of pyrolysis gas (29) from the pyrolysis interior (21) and separation of solid particles (B, F) from the pyrolysis gas (29), wherein a purified product gas (P) is obtained which can be fed (53) to the burner (200);
- separation of solid particles (B, F) from the pyrolysis gas (29) in a solids separator (5), preferably in a centrifugal separator, particularly preferably in a cyclone separator, wherein solid particles (B) separated from the pyrolysis gas (29), in particular fine material particles (F), are returned (55) to the gasifier interior (41).

9. Method according to claim 8, **characterized in that** an identical fuel composition is selected for the first solid fuel (B, B2) and the second solid fuel (B, B4), or **in that** a fuel composition is selected for the first solid fuel (B, B2) with a greater proportion of plastic, preferably plastic films, than for the second solid fuel (B, B4).

10. Method according to claim 8 or 9, **characterized in that,** during operation of the device (1) in the air classifier (3), a gas velocity in the region of at least one, preferably adjustable, classifier aperture (31, 32) of the air classifier (3) of 10 m/s to 40 m/s, particularly preferably from 15 m/s to 30 m/s, is set.

11. Method according to one of claims 8 to 10, **characterized in that** the purified product gas (P) is obtained at an outlet temperature of at most 450°C, preferably of at most 420°C, particularly preferably of at most 400°C, with an overpressure of at least 1.5 bar and with a calorific value of the purified product gas (P) of at least 11 MJ/Nm³, preferably at least 13 MJ/Nm³, particularly preferably at least 15 MJ/Nm³, when it emerges from the solids separator (5).

12. Device (1) according to one of claims 1 to 7, comprising a control system, **characterized in that** the control system is set up to carry out the following method steps of:
- metering a provided first solid fuel (B, B2), preferably a first solid secondary fuel (B, B2) containing solid waste materials, with the first fuel feed device (20) into the pyrolysis interior (21) of the pyrolysis reactor (2);
- metering a provided second solid fuel (B, B4), preferably a second solid secondary fuel (B, B2) containing solid waste materials, with the second fuel feed device (40) into the gasifier interior (41) of the gasification reactor (4);
- metering of provided combustion air (L) with the at least one air feed device (45) into the gasifier interior (41);
- optionally, ignition of the solid fuel (B, B4) located in the gasifier interior (41) with simultaneous supply of combustion air (L) into the gasifier interior (41);
- setting a gasification temperature in the gasifier interior (41) of 700°C to 950°C, preferably from 750°C to 900°C, wherein the gasification temperature is controlled as a function of a metered quantity of the second solid fuel (B, B4) supplied and as a function of a metered quantity of the combustion air (L) supplied into the gasifier interior (41);
- setting an overpressure in the gasifier interior (41) of 0.5 bar to 20 bar, preferably from 0.8 bar to 10 bar, wherein the pressure is set depending on the metered quantity of combustion air (L) supplied;
- conducting hot flue gas (49) from the gasifier interior (41) through the air classifier (3) into the pyrolysis interior (21) of the pyrolysis reactor (2) arranged above the air classifier (3), wherein a control of the metered quantity of the second solid fuel (B,B4) supplied and a control of the metered quantity of the combustion air (L) supplied are carried out as a function of a temperature of the hot flue gas (49) in the air classifier (3), preferably in the region of at least one classifier aperture (31, 32) of the air classifier (3);
- heating of the solid fuel (B, B2) located in the pyrolysis interior (21) of the pyrolysis reactor (2) by heat transfer as a result of direct contact with the rising hot flue gas (49) with simultaneous cooling of the hot flue gas (49) until a pyrolysis temperature in the pyrolysis interior (21) of at most 600°C, preferably of at most 500°C, particularly preferably of at most 450°C, is set, wherein the pyrolysis temperature is controlled as a function of the metered quantity of the combustion air (L) supplied to the gasifier interior (41) and as a function of the metered quantity of the first solid fuel (B, B2) supplied;
- discharge of pyrolysis gas (29) from the pyrolysis interior (21) and separation of solid particles (B, F) from the pyrolysis gas (29) by means of a solids separator (5), wherein a purified product gas (P) with an outlet temperature of at most 450°C, preferably of at most 420°C, particularly preferably of at most 400°C, is obtained at an overpressure of at least 1.5 bar, wherein a control of the outlet temperature of the purified product gas (P) from the solids separator (5) is carried out as a function of the metered quantity of combustion air (L) supplied to the gasifier interior (41) and as a function of the metered quantity of the first solid fuel (B, B2) supplied to the pyrolysis interior (21) and the pressure setting is carried out as a function of the metered quantity of combustion air (L) supplied.

13. Device (1) according to claim 12, **characterized in that** the control system is set up to adjust a gas velocity in the range of at least one, preferably adjustable, classifier aperture (31, 32) of the air classifier (3) of 10 m/s to 40 m/s, particularly preferably from 15 m/s to 30 m/s, in the operating state of the device (1), wherein the gas velocity in the air classifier (3) is set as a function of the metered quantity of combustion air (L) supplied.

## Revendications

1. Dispositif (1) de pyrolyse de combustible (B, B2, B4) pour le chauffage d'un brûleur (200), en particulier d'un brûleur d'une installation de four rotatif, comprenant un réacteur de pyrolyse (2), un réacteur de gazéification (4), un séparateur à air (3) situé entre le réacteur de pyrolyse (2) et le réacteur de gazéification (4), ainsi qu'un séparateur de solides (5) situé en aval du réacteur de pyrolyse (2), de préférence un séparateur centrifuge, de manière particulièrement préférée un séparateur à cyclone, dans lequel le réacteur de pyrolyse (2) comprend un espace intérieur de pyrolyse (21) ayant un premier dispositif d'alimentation en combustible (20) dans l'espace intérieur de pyrolyse (21), le réacteur de gazéification (4) ayant un espace intérieur de gazéification (41) avec un deuxième dispositif d'alimentation en combustible (40) et avec au moins dispositif d'alimentation en air (45) dans l'espace intérieur de gazéification (41), le réacteur de gazéification (4) étant situé, vu dans une direction de hauteur (H), au-dessous du réacteur de pyrolyse (2), et l'espace intérieur de pyrolyse (21) du réacteur de pyrolyse (2) étant relié en communication à l'espace intérieur de gazéification (41) du réacteur de gazéification (4) situé sous celui-ci au moyen du séparateur à air (3) situé entre le réacteur de pyrolyse (2) et le réacteur de gazéification (4), une sortie (28) du réacteur de pyrolyse (2) étant prévue pour le gaz de pyrolyse (29) provenant de l'espace intérieur de pyrolyse (21), la sortie (28) étant en communication fluidique (52) avec le séparateur de solides (5) en aval et le séparateur de solides (5) étant adapté pour purifier le gaz de pyrolyse (29) et ainsi produire un gaz de produit (P) purifié qui peut être introduit dans le brûleur (200) lorsque le dispositif (1) est en fonctionnement, le séparateur de solides (5) présentant une conduite d'alimentation (52) pour le gaz de pyrolyse (29), une conduite de gaz de produit (53) pour l'alimentation en gaz de produit (P) purifié au brûleur (200) ainsi qu'une conduite de retour (54) pour les particules solides (B) séparées du gaz de pyrolyse (29), en particulier pour les particules fines (F), et la conduite d'alimentation (52) pour le gaz de pyrolyse (29) étant en communication fluidique avec la sortie (28) du réacteur de pyrolyse (2), la sortie (28) étant de préférence disposée dans une zone intérieure supérieure (23) du réacteur de pyrolyse (2), et la conduite de retour (54) pour le recyclage du combustible (55) étant en communication fluidique avec l'espace intérieur de gazéification (41) et débouchant de préférence dans celui-ci (41).

2. Dispositif (1) selon la revendication 1, **caractérisé en ce que** le premier dispositif d'alimentation en combustible (20) ainsi que le deuxième dispositif d'alimentation en combustible (40) sont respectivement adaptés pour transporter, lorsque le dispositif (1) est en fonctionnement, des combustibles solides (B, B2, B4), de préférence des combustibles solides (B, B2, B4) secondaires contenant des déchets solides, le premier dispositif d'alimentation en combustible (20) étant adapté pour doser un premier combustible solide (B, B2) pour le réacteur de pyrolyse (2) dans l'espace intérieur de pyrolyse (21) lorsque le dispositif (1) est en fonctionnement, et le deuxième dispositif d'alimentation en combustible (40) étant adapté pour doser un deuxième combustible solide (B, B4) pour le réacteur de gazéification (4) dans l'espace intérieur de gazéification (41) lorsque le dispositif (1) est en fonctionnement.

3. Dispositif (1) selon la revendication 1 ou 2, **caractérisé en ce que** l'au moins un dispositif d'alimentation en air (45) est adapté pour doser de l'air de combustion (L) dans l'espace intérieur de gazéification (41), de préférence dans une zone intérieure inférieure (42) de l'espace intérieur du gazéification (41), vu dans la direction de hauteur (H), lorsque le dispositif (1) est en fonctionnement.

4. Dispositif (1) selon l'une des revendications 1 à 3, **caractérisé en ce que** le réacteur de gazéification (4) est adapté pour être mis sous pression lorsque le dispositif (1) est en fonctionnement et pour gazéifier de manière autothermique le combustible (B, B4) se trouvant dans son espace intérieur de gazéification (41) avec alimentation (45) en air de combustion (L) à une température de gazéification de 700°C à 950°C, de préférence de 750°C à 900°C, le réacteur de gazéification (4) étant de préférence un gazéificateur à lit fluidisé.

5. Dispositif (1) selon l'une des revendications 1 à 4, **caractérisé en ce que** le réacteur de gazéification (4) est adapté pour être soumis à une surpression de 0,5 bar à 20 bars, de préférence de 0,8 bar à 10 bars, lorsque le dispositif (1) est en fonctionnement.

6. Dispositif (1) selon l'une des revendications 1 à 5, **caractérisé en ce que** le réacteur de pyrolyse (2) est adapté, lorsque le dispositif (1) est en fonctionnement, pour pyrolyser le combustible (B, B2) se trouvant dans son espace intérieur de pyrolyse (21) conjointement avec un gaz d'échappement (49) chaud qui peut être amené au réacteur de pyrolyse (2) à partir du réacteur de gazéification (4) à travers le séparateur à air (3), à une température de pyrolyse d'au plus 600°C, de préférence d'au plus 500°C, de manière particulièrement préférée d'au plus 450°C, le réacteur de pyrolyse (2) étant de préférence un réacteur à courant aérien.

7. Dispositif (1) selon l'une des revendications 1 à 6, **caractérisé en ce que** le séparateur à air (3) présente au moins un diaphragme de séparateur (31, 32), de préférence au moins un diaphragme de séparateur (31, 32) ajustable, et dans lequel le séparateur à air (3) est adapté, lorsque le dispositif (1) est en fonctionnement, pour classer les particules solides (B) du combustible en particules grossières (G) qui peuvent parvenir du réacteur de pyrolyse (2) vers le bas dans le réacteur de gazéification (4) dans le sens inverse de la direction de hauteur (H), ainsi qu'en particules fines (F), qui sont plus légères que les particules grossières (G) et qui peuvent parvenir dans la direction de hauteur (H) vers le haut dans le réacteur de pyrolyse (2), une vitesse de gaz dans la zone de l'au moins un diaphragme de séparateur (31, 32) de 10 m/s à 40 m/s, de préférence de 15 m/s à 30 m/s, étant de préférence réglable lorsque le dispositif (1) est en fonctionnement.

8. Procédé de pyrolyse de combustible (B) pour le chauffage d'un brûleur (200), en particulier d'un brûleur d'une installation de four rotatif, le procédé comprenant les étapes suivantes :
- fourniture d'un dispositif (1) selon l'une des revendications 1 à 7 ;
- fourniture et alimentation dosée d'un premier combustible solide (B, B2), de préférence d'un premier combustible solide (B, B2) secondaire contenant des déchets solides, avec le premier dispositif d'alimentation en combustible (20) dans l'espace intérieur de pyrolyse (21) du réacteur de pyrolyse (2) ;
- fourniture et alimentation dosée d'un deuxième combustible solide (B, B4), de préférence d'un deuxième combustible solide (B, B2) secondaire contenant des déchets solides, avec le deuxième dispositif d'alimentation en combustible (40) dans l'espace intérieur de gazéification (41) du réacteur de gazéification (4) ;
- fourniture et alimentation dosée en air de combustion (L) avec au moins un dispositif d'alimentation en air (45) dans l'espace intérieur de gazéification (41) ;
- le cas échéant, allumage du combustible solide (B, B4) se trouvant dans l'espace intérieur de gazéification (41) avec une alimentation simultanée en air de combustion (L) dans l'espace intérieur de gazéification (41) ;
- réglage d'une température de gazéification dans l'espace intérieur du gazéification (41) de 700°C à 950°C, de préférence de 750°C à 900°C ;
- réglage d'une surpression dans l'espace intérieur de gazéification (41) de 0,5 bar à 20 bars, de préférence de 0,8 bar à 10 bars ;
- guidage de gaz d'échappement (49) chaud, lequel gaz d'échappement (49) étant produit lors de la gazéification du combustible (B, B4) se trouvant dans l'espace intérieur de gazéification (41), depuis l'espace intérieur de gazéification (41) à travers le séparateur à air (3) dans l'espace intérieur de pyrolyse (21) du réacteur de pyrolyse (2) situé au-dessus du séparateur à air (3) ;
- chauffage du combustible solide (B, B2) se trouvant dans l'espace intérieur de pyrolyse (21) du réacteur de pyrolyse (2) par transfert de chaleur par suite d'un contact direct avec le gaz d'échappement (49) chaud montant avec refroidissement simultané du gaz d'échappement (49) chaud ;
- réglage d'une température de pyrolyse dans l'espace intérieur de pyrolyse (21) d'au plus 600°C, de préférence d'au plus 500°C, de manière particulièrement préférée d'au plus 450°C ;
- évacuation du gaz de pyrolyse (29) de l'espace intérieur de pyrolyse (21) et séparation des particules solides (B, F) du gaz de pyrolyse (29), ce qui permet d'obtenir un gaz produit (P) purifié, qui est amené (53) au brûleur (200) ;
- séparation de particules solides (B, F) du gaz de pyrolyse (29) dans un séparateur de solides (5), de préférence dans un séparateur centrifuge, de manière particulièrement préférée dans un séparateur à cyclone, des particules solides (B) séparées du gaz de pyrolyse (29), en particulier des particules fines (F), étant renvoyées (55) dans l'espace intérieur de gazéification (41).

9. Procédé selon la revendication 8, **caractérisé en ce qu'une** même composition de combustible est choisie pour le premier combustible solide (B, B2) et le deuxième combustible solide (B, B4), ou **en ce qu'**une composition de combustible est choisie pour le premier combustible solide (B, B2) avec une plus grande proportion de plastique, de préférence de films plastiques, que pour le deuxième combustible solide (B, B4).

10. Procédé selon la revendication 8 ou 9, **caractérisé en ce que,** lorsque le dispositif (1) est en fonctionnement, est réglée dans le séparateur à air (3) une vitesse de gaz dans la zone d'au moins un diaphragme de séparateur (31, 32), de préférence ajustable, du séparateur à air (3) de 10 m/s à 40 m/s, de préférence de 15 m/s à 30 m/s.

11. Procédé selon l'une des revendications 8 à 10, **caractérisé en ce que** le gaz produit (P) purifié est obtenu à la sortie du séparateur de solides (5) avec une température de sortie d'au plus 450°C, de préférence d'au plus 420°C, plus préférentiellement d'au plus 400°C, avec une surpression d'au moins 1,5 bars ainsi qu'avec un pouvoir calorifique du gaz produit (P) purifié d'au moins 11 MJ/Nm³, de préférence d'au moins 13 MJ/Nm³, plus préférentiellement d'au moins 15 MJ/Nm³.

12. Dispositif (1) selon l'une des revendications 1 à 7 comprenant une commande, **caractérisé en ce que** la commande est adaptée pour exécuter les étapes de procédé suivantes :
- dosage d'un premier combustible solide (B, B2) fourni, de préférence un premier combustible solide (B, B2) secondaire contenant des déchets solides, avec le premier dispositif d'alimentation en combustible (20) dans l'espace intérieur de pyrolyse (21) du réacteur de pyrolyse (2) ;
- dosage d'un deuxième combustible solide (B, B4) fourni, de préférence un deuxième combustible solide (B, B2) secondaire contenant des déchets solides, avec le deuxième dispositif d'alimentation en combustible (40) dans l'espace intérieur de gazéification (41) du réacteur de gazéification (4) ;
- dosage de l'air de combustion (L) fourni avec l'au moins un dispositif d'alimentation en air (45) dans l'espace intérieur de gazéification (41) ;
- le cas échéant, allumage du combustible solide (B, B4) se trouvant dans l'espace intérieur de gazéification (41) avec une alimentation simultanée en air de combustion (L) dans l'espace intérieur de gazéification (41) ;
- réglage d'une température de gazéification dans l'espace intérieur de gazéification (41) de 700°C à 950°C, de préférence de 750°C à 900°C, une régulation de température de la température de gazéification étant effectuée en fonction d'une quantité de dosage du deuxième combustible solide (B, B4) amené ainsi qu'en fonction d'une quantité de dosage de l'air de combustion (L) amené dans l'espace intérieur de gazéification (41) ;
- réglage d'une surpression dans l'espace intérieur de gazéification (41) de 0,5 bar à 20 bars, de préférence de 0,8 bar à 10 bars, un réglage de la pression étant effectué en fonction de la quantité de dosage de l'air de combustion (L) amené ;
- guidage de gaz d'échappement (49) chaud depuis l'espace intérieur de gazéification (41) à travers le séparateur à air (3) dans l'espace intérieur de pyrolyse (21) du réacteur de pyrolyse (2) situé au-dessus du séparateur à air (3), une régulation de la quantité de dosage du deuxième combustible solide (B, B4) amené ainsi qu'une régulation de la quantité de dosage de l'air de combustion (L) amené s'effectuant en fonction d'une température du gaz d'échappement (49) chaud dans le séparateur à air (3), de préférence dans la zone d'au moins un diaphragme de séparateur (31, 32) du séparateur à air (3) ;
- chauffage du combustible solide (B, B2) se trouvant dans l'espace intérieur de pyrolyse (21) du réacteur de pyrolyse (2) par transfert de chaleur par suite d'un contact direct avec le gaz d'échappement (49) chaud montant avec refroidissement simultané du gaz d'échappement (49) chaud, jusqu'à ce qu'une température de pyrolyse dans l'espace intérieur de pyrolyse (21) d'au plus 600°C, de préférence d'au plus 500°C, de manière particulièrement préférée d'au plus 450°C, une régulation de la température de pyrolyse s'effectuant en fonction de la quantité de dosage de l'air de combustion (L) amené à l'espace intérieur de gazéification (41) ainsi qu'en fonction de la quantité de dosage du premier combustible solide (B, B2) amené;
- évacuation du gaz de pyrolyse (29) de l'espace intérieur de pyrolyse (21) et séparation des particules solides (B, F) du gaz de pyrolyse (29) au moyen d'un séparateur de solides (5), un gaz produit (P) purifié ayant une température de sortie d'au plus 450°C, de préférence d'au plus 420°C, de manière particulièrement préférée d'au plus 400°C, étant obtenu sous une surpression d'au moins 1,5 bar, une régulation de la température de sortie du gaz produit (P) purifié du séparateur de solides (5) étant effectuée en fonction de la quantité de dosage de l'air de combustion (L) amené à l'espace intérieur du gazéification (41) ainsi qu'en fonction de la quantité de dosage du premier combustible solide (B, B2) amené à l'espace intérieur de la pyrolyse (21) et le réglage de la pression étant effectué en fonction de la quantité de dosage de l'air de combustion (L) amené.

13. Dispositif (1) selon la revendication 12, **caractérisé en ce que** la commande est adaptée, lorsque le dispositif (1) est en fonctionnement, pour régler dans le séparateur à air (3) une vitesse de gaz dans la zone d'au moins un diaphragme de séparateur (31, 32), de préférence ajustable, du séparateur à air (3) de 10 m/s à 40 m/s, de préférence de 15 m/s à 30 m/s, le réglage de la vitesse de gaz dans le séparateur à air (3) étant effectué en fonction de la quantité de dosage de l'air de combustion (L) amené.
